(19)

**Europäisches Patentamt**
**European Patent Office**
**Office européen des brevets**

(11) **EP 3 544 722 B1**

(12) **EUROPEAN PATENT SPECIFICATION**

(45) Date of publication and mention
of the grant of the patent:
**15.01.2025 Bulletin 2025/03**

(51) International Patent Classification (IPC):
**B01J 8/00** *(2006.01)* **B65G 53/00** *(2006.01)*
**B65G 53/06** *(2006.01)* **B65G 53/34** *(2006.01)*
**B65G 53/66** *(2006.01)*

(21) Application number: **17808057.8**

(22) Date of filing: **28.11.2017**

(52) Cooperative Patent Classification (CPC):
**B01J 8/0015; B65G 49/08; B65G 53/06;**
**B65G 53/34; B65G 53/66**

(86) International application number:
**PCT/EP2017/080642**

(87) International publication number:
**WO 2018/096167 (31.05.2018 Gazette 2018/22)**

(54) **PROCESS FOR PNEUMATICALLY CONVEYING A POWDERY MATERIAL**

VERFAHREN ZUM PNEUMATISCHEN FÖRDERN EINES PULVERFÖRMIGEN MATERIALS

PROCÉDÉ DE TRANSPORT PNEUMATIQUE D'UN MATÉRIAU PULVÉRULENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **28.11.2016 PCT/EP2016/079012**
**28.11.2016 US 201615361618**

(43) Date of publication of application:
**02.10.2019 Bulletin 2019/40**

(73) Proprietor: **S.A. Lhoist Recherche et**
**Développement**
**1342 Ottignies-Louvain-la-Neuve (BE)**

(72) Inventors:
• **BAQUET, Hugues**
**6900 Aye (BE)**
• **HEISZWOLF, Johan**
**3090 Overijse (BE)**

• **LETOUZEY, Joël**
**50800 Rouffigny (FR)**
• **LYONS, David**
**Fort Worth, Texas 76118 (US)**
• **FITZGERALD, Howard, Braxton**
**Colbert, GA 30628 (US)**
• **METZ, Chad, Timothy**
**Watauga, TX 76148 (US)**
• **FILIPPELLI, Gregory, M.**
**Dillsburg, PA 17019 (US)**

(74) Representative: **Gevers Patents**
**De Kleetlaan 7A**
**1831 Diegem (BE)**

(56) References cited:
WO-A1-00/38848  CN-U- 205 346 331
DE-A1- 10 024 762  FR-A1- 2 941 388
JP-B2- 3 154 226  US-A- 5 860 187
US-A1- 2002 061 271  US-A1- 2003 111 131
US-A1- 2016 334 264  US-B1- 6 607 008

**Description**

The present invention relates to a process for pneumatically conveying a powdery material, in particular a powdery sorbent, comprising the steps as defined in claim 1.

During pneumatic conveying of a powdery material, in particular a powdery sorbent, between a powdery material, in particular a powdery sorbent, storage tank and a recipient zone, pressure drop fluctuations occur at any time, very frequently and are difficult to control. The fluctuations in pressure drop may be due to a number of intrinsic factors of the pneumatic conveying process or to external event.

Such fluctuations of pressure drop are disturbing the entire pneumatic conveying of the powdery material, in particular the powdery sorbent, to be conveyed causing different kinds of perturbations. Amongst other perturbations, one can find the fact that the fluctuations in pressure drop are causing a modification of the conveying velocity of the powdery material/sorbent.

Powdery material/sorbent flows have a saltation velocity under which the powdery material, in particular the powdery sorbent, starts settling in the pneumatic conveying pipe while conveying fluid blown by blowers is given a safe nominal value of velocity, greater than the saltation velocity to prevent the powdery material, in particular the powdery sorbent, settling inside the pneumatic conveying pipe.

Unfortunately, many fluctuations occur at any time during a pneumatic conveying of a powdery material, in particular a powdery sorbent, causing the pressure drop instability inside the pneumatic conveying pipeline.

Indeed, blowers are characterized by a curve between pressure drop and flowrate. The pressure drop, i.e. the difference of the pressure inside the recipient zone and the pressure at the entrance of the first conveying pipe, is the one imposed by the plant inside which pneumatic conveying shall be performed and the characterizing curve of the blower results in a flowrate into the pneumatic conveying of the powdery material, in particular the powdery sorbent, depending on the value of the pressure occurring inside the plant.

As soon as there is a small fluctuation in pressure drop (caused for example, without being limited thereto, by a change in atmospheric conditions, a change in the temperature of the conveying fluid, a reduction of a pipeline section which can be due to a clogging, a partial clogging, an object disturbing the blower flow, discontinuous loading of a powdery material, notably with a rotary valve, electric power cut or fluctuation in voltage (or current), soot blowing, load (capacity) change, change of operating conditions in the gas scrubber, bag filter pulses, electrostatic precipitator rapping, variations in fuel injection, variations in fuel quality (e.g. energy, moisture and ash content), rate changes of the main, forced draft or induced draft, fans of the plant but also non homogeneity of the flowrate of the powdery material, in particular the powdery sorbent, dosed and fed to the pneumatic conveying pipeline, agglomerates of powder material in the air flow by the dosing means, etc.), the pressure drop starts decreasing or increasing without it being possible to control quickly enough for the pneumatic conveying of the powdery sorbent/material to not be disturbed. These fluctuations in pressure at the recipient zone of the process flue gas can affect directly the gas flow rate used in the pneumatic conveying pipeline prior to injection because the control of the blowers, if any, is usually not sufficiently reactive. There is consequently a change in the flow regime, leading to a change in the mass ratio of powdery material to conveying fluid. As a consequence, for example, without again being limited thereto, when the pressure drop increases, the pneumatic velocity or flowrate of the conveying fluid is reduced such that the velocity of the conveying fluid possibly reaches a value lower than the safe nominal value velocity, causing therefore the powdery material, in particular the powdery sorbent, pneumatically conveyed, to sediment inside the pneumatic conveying pipeline. Sedimentation of the powdery material, in particular powdery sorbent, will cause the pressure drop to increase, leading to an even lower gas flow rate. Clearly, for systems where the gas flow rate is not actively controlled or for systems where the gas flow rate cannot be controlled sufficiently fast, such a pneumatic transport system is unstable.

Conversely, in case of a decrease of the pressure drop, a too high flow can cause the powdery material to stick on the walls of the pipes because of the higher impaction force of the powdery material in regions where changes of cross sections or of direction are present.

The powdery material, in particular the powdery sorbent, starts therefore to accumulate inside the pneumatic conveying pipeline causing on its turn fluctuations of the pressure drop as the passing diameter of the pipeline available for pneumatic conveying is reduced, causing an increase in pressure drop having on its turn consequence on the pneumatic conveying.

As one can understand, the smallest single fluctuation in the pressure drop, which occurs whatever the level of design optimization of the pneumatic conveying, will have strong consequence in the efficiency of the pneumatic conveying of the powdery material, in particular the powdery sorbent, inside the pneumatic conveying pipeline.

Sometimes, the pressure in the flue gas duct will vary, depending on the process operation (examples of the cause of these pressure fluctuations are provided below). Depending on the dosing means, the flue gas pressure fluctuations will cause gas flow fluctuations in the pneumatic conveying system.

This phenomenon of fluctuations is occurring in any conveying fluid when blown. The phenomenon is of course further amplified when a powdery material, in particular a powdery sorbent, is conveyed as the powdery material, in particular the powdery sorbent, itself cannot recover easily the right pressure drop as soon as it starts accumulating inside the pneumatic conveying pipeline. Indeed, once the powdery material begins to deposit as the gas velocity has fallen below the saltation velocity, such powder is not easily re-entrained.

The present invention solves at least a part of these drawbacks by providing a process allowing the efficient improvement of pneumatic conveying of a powdery sorbent in a pneumatic conveying pipeline between a powdery material, in particular a powdery sorbent, storage tank and a recipient zone.

According to the present invention, by the terms recipient zone, it is meant one or more of the following: a furnace or an after burning chamber or a post-combustion zone or another storage recipient for collecting the powdery sorbent, a channel where the powdery material, in particular the powdery sorbent, shall be injected through pneumatic conveying, such as a flue gas duct (i.e. in a furnace or connected to a furnace, in a heat exchanger or connected to a heat exchanger, in a combustion zone or connected to a combustion zone, in an after burning chamber or connected to a burning chamber, in a post-combustion zone or connected to a combustion zone and the like), a pipeline inside a plant, filters devices, such as electrostatic precipitators, bag filters, gas scrubbers, such as dry, semi-wet (spray dry absorbers) or wet scrubbers ...; for the filter devices or the gas scrubbers, the injection point can notably be in the duct before or at the entrance of them.

By the terms pneumatic conveying of powdery material, it is meant within the scope of the invention pneumatic conveying by negative pressure or by positive pressure, pneumatic conveying of powdery material as a dense phase or strand phase or dilute phase, in particular dilute phase, in conveying fluid, or as a discontinuous phase in conveying fluid.

By the terms "connected to", it is meant that one element is connected to another element directly or indirectly, meaning that the elements are in communication one to each other but other elements can be inserted in between. Even though the term "sonic" is used throughout the description, the present invention is limited to nfrasound devices and infrasound waves.

To solve the aforementioned problem, it is provided according to the present invention, a process for pneumatically conveying a powdery material, in particular a powdery sorbent, wherein a sonic device generates sonic waves inside said first pneumatic conveying pipeline and/or up to said recipient zone and provides a counteraction to the fluctuation step of the pressure drop in said first pneumatic conveying pipeline up to said recipient zone. Prior art documents involving the use of infrasound waves are for instance CN 205 346 331 U, FR 2 941 388 A1 and US 5 860 187 A.

It has been indeed surprisingly realized that, for the turbulent flows considered here, the sonic waves generate an increase of pressure drop and that the sonic waves have the capability to counteract on the pressure fluctuations in said first conveying pipeline and/or in said recipient zone.

Sonic waves are sometimes used for de-agglomerating accumulated particles, such as powdery sorbent particles or for preventing or cleaning or removing the accumulated particles in large equipment employing gas solid flows. In these applications the sonic waves generate turbulence in stagnant zones, i.e. areas where the gas velocity is nearly zero resulting in laminar flow conditions, or cause the walls of duct work to mechanically vibrate to prevent particle adhesion. These two mechanisms will prevent particle sedimentation and adhesion to the wall of the duct. However, according to the present invention, the sonic waves are used to increase the pressure drop of the pneumatic conveying flow and the sonic waves according to the present invention are used in such a way that they are able to counteract the fluctuation step of the pressure drop, thereby minimizing perturbations causing the accumulation of powdery material in said pneumatic conveying instead of cleaning or retro-acting on the accumulation of particles.

According to the present invention, said conveying fluid has a flow comprising a boundary layer along said pipeline wall of which the boundary layer thickness changes in regions of varying cross section of said pipeline and regions where the direction changes.

Advantageously, according to the process of the invention, the blower is connected to said first pneumatic conveying pipeline and is blowing conveying fluid inside said first pneumatic conveying pipeline but also said conveying fluid at least partially through said sonic device.

Indeed, the fact that a blower blows conveying fluid inside said pneumatic conveying pipe, but also at least partially through said sonic device further increases the pressure drop in said first pneumatic conveying pipeline, and is more efficient in counteracting the pressure drop fluctuations.

In a particular embodiment, the first pneumatic conveying pipeline is a rigid pipeline, in particular in stainless or carbon steel. This particular embodiment is even more performing when combined with the blower blowing conveying fluid inside said first pneumatic conveying rigid pipeline.

In another particular embodiment, the first pneumatic conveying pipe is a flexible pipeline, in particular in polymer like polyurethane.

Indeed, according to this preferred embodiment, the fluctuations of pressure drop are surprisingly counteracted by the sonic waves generating an increase of pressure drop.

The adhesion of fine particles of powdery material with a mean particle size $d_{50}$ lower than 100 $\mu$m on the wall of a rigid pneumatic transportation pipeline is occurring in areas such as bends, elbows, section reductions or enlargement of said pipeline. Once adhesion of the particles to the wall of the pipeline occurs, if the powdery material, in particular the powdery sorbent, is hydrated lime or a mixture of sorbent comprising hydrated lime, carbonation of the hydrated lime occurs, resulting in the formation of a hard layer that is difficult to remove.

The problem of adhesion to solid objects is increasingly important for particles of decreasing particle diameter because of the increased contribution of electrostatic forces in comparison with friction, impulse and gravitation forces. Powdery sorbent particles with diameter < 100 $\mu$m are generally classified as cohesive according to the Geldart classification (see Cocco, R.; Reddy-Karri, S. B.; Knowlton, T. Introduction to Fluidization. AICHE CEP 2014, No. November, 21-29; Geldart, D. Types of Gas Fluidization. Powder Technol. 1973, 7 (5), 285-292) (Geldart Powder group C) and their flow properties can be evaluated in detail using the flow function classification according to Jenicke (see CAGLI, A. S.; DEVECI, B. N.; OKUTAN, C. H.; SIRKECI, D. A. A.; TEOMAN, E. Y. Flow Property Measurement Using the Jenike Shear Cell for 7 Different Bulk Solids. Proc. Eur. Congr. Chem. Eng. 2007, No. September, 16-20; Jenicke, A. W. Gravity Flow of Bulk Solids. Bull. Univ. Utah 1961, 52 (29), 1-309; Jenicke, A. W. Storage and Flow of Solids. Bull. Univ. Utah 1964, 53 (26), 1-198; Pendyala, R.; Jayanti, S.; Balakrishnan, A. R. Flow and Pressure Drop Fluctuations in a Vertical Tube Subject to Low Frequency Oscillations. Nucl. Eng. Des. 2008, 238 (1), 178-187). With the Jenicke flow function, the internal cohesion of the powder is measured and this can be regarded as a good indicator for the adhesion properties of a powder.

For the adhesion problem of pneumatic transport of powdery sorbent in rigid pipes, the above outlined cleaning mechanisms cannot explain the prevention of adhesion.

In conventional application of sonic waves, the waves are used to create turbulence in systems where the gas velocity is nearly zero inside stagnant zones of the equipment.

The turbulence of a fluid flow in a pipe can be assessed with the Reynolds number:

$$Re = \frac{\rho\, v\, d}{\mu}$$

In which $\rho$ is the conveying fluid density (kg/m$^3$), v is the conveying fluid velocity (m/s), d is the pipe diameter (m) and $\mu$ is the conveying fluid viscosity (Pa s). If they Reynolds number is larger than 2000 (i.e. Re > 2000), the conveying fluid is considered turbulent.

For normal transportation of powdery sorbent, the conveying fluid may be ambient air, the tube diameter is about 0.10 m (4 inch) and the conveying air velocity is typically 20 m/s. Under these conditions the Reynolds number is above one million which implies that the fluid is highly turbulent.

This means that in the case of pneumatic conveying, the sonic waves do not serve to provide local turbulence to laminar flow zones to initiate cleaning or removing the accumulated particles mechanism and thus cannot be responsible for counteracting the fluctuations in pressure drop.

In addition, an increase in pressure drop because of sonic air flow is not expected for highly turbulent flows (see Pendyala, R.; Jayanti, S.; Balakrishnan, A. R. Flow and Pressure Drop Fluctuations in a Vertical Tube Subject to Low Frequency Oscillations. Nucl. Eng. Des. 2008, 238 (1), 178-187 ).

While for duct work and equipment walls, movement of the metal parts is possible because of the large size of the parts and/or thinner walls which therefore have lower flexural strength and hence are more deformable, such movement is not possible for 0.10-0.20 m (4-8 inch) diameter steel or polymer (plastic) pipes used as first pneumatic conveying pipeline. The combination of surface area and wall thickness of the pneumatic conveying pipeline prevents any significant radial movement because of sonic waves.

It is therefore unexpected that the application of sonic waves counteract the fluctuations in pressure drop, thereby also avoiding adhesion of the powdery material, in particular the powdery sorbent particles to the rigid pipe walls. This non-obvious result is caused by the way the sonic waves are generated such as in a preferred embodiment, via a blow-through system in contrast to the conventional systems where a dead end sound generator is used. The consequence of the blow-through generation of sonic waves is a more intense mixing of the gas solid mixture by the start-stop nature of the flow.

In the present invention, the sonic device generating sonic waves is an infrasound device generating infrasonic waves.

In yet another preferred embodiment of the process according to the present invention, when said sonic device provides a counteraction on the fluctuation step of the pressure drop in said first pneumatic conveying pipeline and/or up to said recipient zone, said sonic device provides a smoothing action and/or a masking action which can be also called compensating action, on the fluctuation step of the pressure drop in said first pneumatic conveying pipeline and/or up to said recipient zone.

In a particular embodiment of the process according to the present invention, infrasonic waves are generated inside an infrasound device comprising a first chamber and a second chamber, both first and second chamber being connected to each other by a tube, said infrasonic waves being generated by an exciter inside the first chamber providing infrasound pulses to said conveying fluid blown at least partially inside said first chamber, said generated infrasonic waves being transported through the tube to reach the second chamber.

More preferably, in the process according to the present invention, the first chamber is divided into a first compartment and a second compartment, said first compartment being in connection to said second compartment through a passing hole, said first compartment comprising an internal channel inside which a moving piston is moved from a first position to a second position and from said second position to said first position by a power source, located externally with respect to the first chamber and forming the exciter, said internal channel being concentrically installed inside said first compartment, said infrasonic waves being generated by the moving piston and transported by said conveying fluid from said first compartment, to said second compartment, through the passing hole before being transported through the tube to reach the second chamber. The conveying fluid can be blown through the piston.

In another advantageous embodiment, rotation controllers are included for exciter power source (motor) to avoid inappropriate working frequencies and for increasing efficiency and safety.

In another preferred embodiment, the sonic device creates a pressure increase in the first pneumatic conveying pipeline close to the sonic generator of between 20 and 200 mbar, in particular of at least 30 mbar, in particular of at most 150 mbar.

In an advantageous embodiment according to the present invention, the process further comprises a step of deriving a portion of said conveying fluid blown by the blower before entering the first compartment or connected to the first compartment and introducing it inside the second chamber.

In a particular embodiment, the powdery material, in particular the powdery sorbent is selected from the group consisting of hydrated lime, hydrated or semi-hydrated dolime, limestone, dolomite, quick lime, quick dolime, sodium carbonate or bicarbonate, sodium sesquicarbonate dihydrate (also known as Trona), halloysite, sepiolite, a carbonaceous organic compound selected from active carbon and lignite coke, fly ash or a mixture of any of these compounds.

In a particular embodiment, the powdery material, in particular the powdery sorbent, is preferably a mainly mineral powdery sorbent, meaning that it can be mainly mineral by nature but can typically contain 30 weight % or less, in particular 20 weight % or less, more particularly 15% or less of carbonaceous organic compound selected from active carbon and lignite coke with respect to the weight of the powdery sorbent.

The powdery material, in particular the powdery sorbent is preferably a mainly calcic mineral sorbent containing an amount of calcic sorbent greater than 50 weight %, in particular greater than 70% with respect to the weight of the powdery sorbent, preferably chosen in the group consisting of hydrated lime, hydrated or semi-hydrated dolime, limestone, dolomite, quick lime, quick dolime, or a mixture of any of these compounds.

In yet another preferred embodiment, said conveying fluid is air, inert gas, exhaust gases, or mixture thereof.

In a further preferred embodiment, sonic waves, in particular infrasonic waves, transported inside said first pneumatic conveying pipeline during said transport of powdery material also contacts said dosing means.

In another preferred embodiment, sonic waves, in particular infrasonic waves, travel inside said first pneumatic conveying pipeline during said transport of powdery material and preferably also travel (or are distributed) up to the recipient zone.

In another preferred embodiment in the process according to the present invention, sonic waves, in particular infrasonic waves, transported inside said first pneumatic conveying pipeline during said transport of powdery material are prevented from reaching the blower due to a Helmholtz bass trap connected to said first chamber or preferably on the pipeline between the blower and the first chamber.

In a particular embodiment according to the present invention, the process further comprised an emergency mode and an operating mode, wherein in emergency mode, the blown conveying fluid is prevented from entering said first chamber and is diverted and blown directly to said first pneumatic conveying pipeline, downstream of the sonic device and wherein in operating mode, the blown conveying fluid is provided at least partially to said first chamber.

The present invention also relates to a process for improving capture of polluting compounds from flue gases comprising the steps of:

- Burning a fuel and/or a material to be burned or heating a material to be heated or melted, producing flue gases in a recipient zone,
- Pneumatically conveying a powdery sorbent provided for capturing said polluting compounds according to the process of any one of the claims 1 to 7, said recipient zone being a flue gas duct,
- Capturing polluting compounds by said powdery sorbent inside said flue gas duct thereby depleting the flue gas from polluting compounds.

Specifically, the process for improving the capture of polluting compounds from flue gases comprises the steps of:

- Burning fuel and/or a material to be burned or heating a material to be heated or melted, producing flue gases in a recipient zone,
- Pneumatically conveying a powdery sorbent in a first pneumatic conveying pipeline from a powdery sorbent storage tank to a recipient zone being a flue gas duct, said first pneumatic conveying pipeline comprising a pipeline wall and being connected to said powdery sorbent storage tank and to said recipient zone, said powdery sorbent being pneumatically transported inside said first pneumatic conveying pipeline and into said flue gas duct by a flow generated by a blower connected to said first pneumatic conveying pipeline and blowing conveying fluid inside said first pneumatic conveying pipeline in which particles of said powdery sorbent are transported,

- A powdery sorbent dosing step by means of a dosing means for dosing an amount of said powdery sorbent when entering from said powdery sorbent storage tank into said first pneumatic conveying pipeline, said first pneumatic conveying pipeline being connected to said powdery sorbent storage tank through said dosing means,
- A fluctuation step of pressure drop in said first pneumatic conveying pipeline and/or up to said flue gas duct,
- A capture of polluting compounds by said powdery sorbent inside said flue gas duct thereby depleting the flue gas from polluting compounds.

According to the present invention, fuel can mean a gas, a liquid, a paste or a solid, notably coal and/or oil.

According to the present invention, by the terms material to be burned or material to be heated or melted, it is meant, without being limited thereto, garbage material (domestic or industrial or clinical), silicate material for producing cement or glass by heating raw material to be heated, limestone or dolostone (dolomite), metal ore, in particular iron ore, brick or tiles and the like ; the material to be heated or burned can also be recycled material like scraps of steel, batteries...

Typically, the treatment of gases, in particular flue gases, requires abatement of acid gases, notably HCl, $SO_2$, $SO_3$ and/or HF, which reduction may be carried out under dry conditions, by injecting a substance, often mineral, dry and powdery, into a flue gas flow or through a filter-bed comprising solid particles either fixed or in motion. In this case, the powdery compound generally comprises a calcium-magnesium-based compound, in particular lime, preferably slaked or hydrated lime or a sodium compound like a sodium carbonate or bicarbonate. Other compounds may also be used notably those used for reducing dioxins, furans and/or heavy metals including mercury, for example carbonaceous substance like active carbon or lignite coke or mineral substance, like those based on phyllosilicates, such as sepiolite or halloysite or the like.

Various solutions have been developed to improve the polluting compounds capture, such as for example the solution described in WO2014/206880. WO2014/206880 describes a device for injecting a powdery mineral compound into a flue gas duct comprising a source of powdery compound, a powdery compound injection piping, supplied by the source of powdery compound and laid out so as to open into said gas duct. The device for injecting a powdery compound further comprises a source of monophasic liquid aqueous phase and at least one piping for injecting a monophasic liquid aqueous phase as droplets. According to this document, the piping for injecting a monophasic liquid aqueous phase is located in a peripheral space localized around the external face of the powdery compound injection piping.

Another solution is described in document JPS61259747. According to this document, an absorbent such as slaked lime is fed inside a solid-gas contactor wherein waste gas is also fed. The solid-gas contactor comprises superimposed perforated plates. The waste gas is fed at the bottom side of the contactor and will escape the contactor further depleted in captured pollutant at the upper stage of the contactor after having passed through the perforated plates. The absorbent is fed above the waste gas, but under the perforated plates inside the contactor. Ultra-low frequency sound in air is generated and introduced in the contactor to form a multistage jet stream bed solid-gas contactor.

The emission of pollutant in the atmosphere becomes more and more regulated and the authorized level of polluting compounds released in flue gas is severely controlled. For this reason, industries, called herein after "burning industries" using burners such as garbage incinerator, but also industries using furnaces such as cement industries, lime industries, glass industries are more and more controlling polluting compounds emission in flue gas treatment to stick with environmental requirements.

Unfortunately, even if many precautions are taken to react and pro-act to reduce the level of pollutants in flue gases, all of those precautions are causing themselves fluctuations in the pneumatic conveying of the powdery sorbent and therefore deficiencies in the pollutants capture.

The present invention solves at least a part of these drawbacks by providing a process that improves the efficiency of pollutants capture from flue gases whereby fluctuations and so deficiencies in the pollutant capture are reduced as much as possible.

To solve this problem, it is provided according to the present invention, a process for improving capture of polluting compounds from flue gases as mentioned previously, wherein a sonic device generates sonic waves inside said first pneumatic conveying pipeline and/or up to said recipient zone and provides a counteraction on the fluctuation step of the pressure drop in said first pneumatic conveying pipeline and/or up to said recipient zone, said recipient zone being said flue gas duct.

According to the present invention, the counteraction on the fluctuation step of the pressure drop in said first pneumatic conveying pipeline causes the improvement of the pollutant compounds capture by reducing undesired fluctuations in powdery sorbent, in particular powdery mineral sorbent, fed in the flue gas duct by sonic waves transported inside said first pneumatic conveying pipeline during said pneumatic conveying of powdery sorbent.

Indeed, it has been found surprisingly that sonic waves transported inside said first pneumatic conveying pipeline during said pneumatic conveying of powdery sorbent has a direct impact on fluctuations in pneumatic conveying of powdery sorbent fed in the flue gas duct.

It has been shown according to the present invention that the appropriated use of sonic waves, creating an increase of the pressure drop inside said first pneumatic conveying pipeline during said transport of powdery sorbent, can solve the fluctuations in the powdery material, in particular the powdery sorbent, injected inside the flue gas duct.

The sonic waves travelling inside said first pneumatic conveying pipeline during said transport of powdery sorbent have been shown to prevent deficiencies in the pollutants capture inside the flue gas duct by counteracting very quickly on fluctuations in the pressure drop, thereby preventing fluctuating pressure drops from causing the velocity of the particles to fall below the saltation velocity where they would then begin to settle and enabling them to be conveyed by the pneumatic transport and as a consequence to still reach the flue gas duct.

Indeed, this effect is reached by the combination of the proper use of the sonic waves creating an increase of pressure drop in the first pneumatic conveying pipeline together with the collision between the particles of the powdery sorbent and the sonic waves having fluctuating frequency of the waves that change the location of the antinodes and the vibration nodes of the sound in the pipe.

Typically, when the clogging starts, the diameter of the first pneumatic conveying pipeline is reduced and this will also change the weight ratio between said conveying fluid and said powdery material, in particular said powdery sorbent for the same reason as aforementioned.

Therefore, according to the present invention, the sonic waves transported inside said first pneumatic conveying pipeline during said conveying of powdery sorbent have been shown to improve the level of pollutants capture by counteracting on fluctuations in the pressure drop in the first pneumatic conveying pipeline and thereby ensuring adequate/optimizing flowrate of powdery sorbent to the flue gas duct.

In a preferred embodiment of the process according to the present invention, a fluctuation step of operating conditions of said burning step of fuel and/or said material to be burned or to be heated or to be melted generates a first signal and/or the fluctuation step of the pressure drop inside said first conveying pipeline, said process further comprising an adjusting step of said amount of powdery sorbent in response to said first signal and/or to said fluctuation step of the pressure drop inside said first conveying pipeline.

More and more, burning industries use an analyzer at the exit of the flue gas duct to measure level of polluting compounds (example of first signal) and have put in place over time a control loop in order to control the amount of powdery sorbent used to capture those pollutants. For example, if the level of $SO_2$ starts to increase, the amount of powdery sorbent will be increased to improve the capture of this pollutant. If the level of $SO_2$ starts to decrease, the amount of powdery sorbent will be decreased.

Other "burning industries" are not using continuous analysis but as a precautionary measure, they adjust the amount of powdery sorbent based on several criteria and measurement (first signal), such as the level of sulfur in the fuel which will be used, pre-analysis or data regarding the level of chloride or sulfur present in the garbage to be burned or the material to be heated (metal ore, recycling material...), based on the expected yield of the combustion or the heating step, the rotation of people running the furnace, the primary air level introduced in the furnace to do the combustion of the material to be burned, based on temperature, atmospheric pressure, ... The amount of powdery sorbent is then fixed manually for a predetermined period of time and changed when a new condition (first signal) arises.

More particularly, when a first signal arises from exhaust gases from the combustion of fuel and/or material to be burned, such as an increase in pollutants level, a decrease of pollutants level, the response to be given is to change the amount of powdery sorbent to be introduced inside the flue gas duct. The change in the amount of powdery sorbent which is blown inside the first pneumatic conveying pipeline by the blower yields to a change in the weight ratio between said conveying fluid and said powdery sorbent which creates fluctuations in the pressure drop of the pneumatic transport, thereby causing fluctuations in the powdery material, in particular the powdery sorbent injected inside the flue gas duct.

Indeed, the change in the amount of powdery sorbent causes fluctuations in the operation of the pneumatic conveying system causing itself fluctuations of the conveying fluid flow rate to adapt itself to the counterpressure as the blowing flowrate stays quite stable at the exit of the blower in the first pneumatic conveying pipeline.

In response to a first signal, changes occur in the weight ratio between said powdery sorbent and said conveying fluid. The particles of the powdery sorbent are conveyed with fluctuating speed in the first pneumatic conveying pipeline which can increase or decrease.

According to another preferred embodiment according to the process of the invention, said first signal is such as wind speed of environment at the outlet of the chimney, atmospheric pressure of environment at the outlet of the chimney or outside said flue gas duct, temperature of the flue gas, nature of the fuel, sulfur content of the fuel, sulfur content of the flue gas, chloride content of the flue gas, mercury content of the flue gas, chloride content of material to be burned or heated, sulfur content of material to be burned or heated, mercury content of material to be burned or heated, and their combination.

In another preferred embodiment of the process for improving capture of polluting compounds from flue gases, the sonic device creates a pressure increase in the first pneumatic conveying pipeline close to the sonic generator of between 20 and 200 mbar, in particular of at least 30 mbar, in particular of at most 150 mbar.

According to the process of the invention, the blower is connected to said first pneumatic conveying pipeline and is blowing conveying fluid inside said first pneumatic conveying pipeline but also said conveying fluid at least partially through said sonic device.

Indeed, the fact that a blower blows conveying fluid inside said pneumatic conveying pipeline, but also at least partially through said sonic device further increases the pressure drop in said first pneumatic conveying pipeline, thereby acting even more efficiently for counteracting the pressure drop fluctuations which impact positively capture of polluting compounds from flue gases by said powdery sorbent conveyed through said first pneumatic conveying pipeline and/or up to said flue gas duct.

In a preferred embodiment, the first pneumatic conveying pipeline is a rigid pipeline, in particular in stainless steel. This preferred embodiment is even more performing when combined with the blower blowing conveying fluid inside said first pneumatic conveying rigid pipe.

Indeed, the fluctuations of pressure drop are surprisingly counteracted by the sonic waves generating an increase of pressure drop.

The adhesion of fine particles of powdery material with a mean particle size $d_{50}$ lower than 100 $\mu$m on the wall of a rigid pneumatic transportation pipeline is occurring at areas such as bends, elbows, section reductions or enlargement of said pipeline. Once adhesion of the particles to the wall of the pipeline occurs, if the powdery sorbent is hydrated lime or a mixture of sorbent comprising hydrated lime, carbonation of the hydrated lime occurs, resulting in the formation of a hard layer that is difficult to remove.

The problem of adhesion to solid objects is increasingly important for particles of decreasing particle diameter because of the increased contribution of electrostatic forces in comparison with friction, impulse and gravitation forces. Powdery sorbent particles with diameter < 100 $\mu$m are generally classified as cohesive according to the Geldart classification and their flow properties can be evaluated in detail using the flow function classification according to Jenicke. With the Jenicke flow function, the internal cohesion of the powder is measured and this can be regarded as a good indicator for the adhesion properties of a powder.

For the adhesion problem of pneumatic transport of powdery sorbent in rigid pipes, the above outlined mechanism cleaning mechanisms cannot explain the prevention of adhesion.

In conventional application of sonic waves, the waves are used to create turbulence in systems where the gas velocity is nearly zero inside stagnant zones of the equipment.

The turbulence of a fluid flow in a pipe can be assessed with the Reynolds number:

$$ Re = \frac{\rho \, v \, d}{\mu} $$

In which $\rho$ is the conveying fluid density (kg/m$^3$), v is the conveying fluid velocity (m/s), d is the pipe diameter (m) and $\mu$ is the conveying fluid viscosity (Pa s). If they Reynolds number is larger than 2000 (i.e. Re > 2000), the conveying fluid is considered turbulent.

For normal transportation of powdery sorbent the conveying fluid may be ambient air, the tube diameter is about 0.1 m (4 inch) and the conveying air velocity is typically 20 m/s. Under these conditions the Reynolds number is above one million which implies that the fluid behaves highly turbulent.

This means that in the case of pneumatic conveying, the sonic waves do not serve to provide local turbulence to laminar flow zones to initiate cleaning or removing the accumulated particles mechanism and thus cannot be responsible for counteracting the fluctuations in pressure drop.

In addition, an increase in pressure drop because of sonic air flow is not expected for highly turbulent flows (see Pendyala, R.; Jayanti, S.; Balakrishnan, A. R. Flow and Pressure Drop Fluctuations in a Vertical Tube Subject to Low Frequency Oscillations. Nucl. Eng. Des. 2008, 238 (1), 178-187 ).

While for duct work and equipment walls movement of the metal parts is possible because of the large size of the parts, such movement is not possible for 0.10-0.20 m (4-8 inch) diameter steel pipes used as first pneumatic conveying pipeline. The combination of surface area and wall thickness of the pneumatic conveying pipeline prevent any significant radial movement because of sonic waves.

It is therefore unexpected that the application of sonic waves counteract the fluctuations in pressure drop, thereby also avoiding adhesion of the powdery sorbent particles to the rigid pipe walls. This non-obvious result is caused by the way the sonic waves are generated such as in a preferred embodiment, via a blow-through system in contrast to the conventional systems where a dead end sound generator is used. The consequence of the blow-through generation of sonic waves is a more intense mixing by the start-stop nature of the flow.

In the present invention, the sonic device generating sonic waves is an infrasound device generating infrasonic waves.

In the process for improving capture of polluting compounds from flue gases according to the present invention, when said sonic device provides a counteraction on the fluctuation step of the pressure drop in said first pneumatic conveying pipeline and/or up to said flue gas duct, said sonic device provides a smoothing action and/or a masking action which can be also called compensating action, on the fluctuation step of the pressure drop in said first pneumatic conveying pipeline and/or up to said flue gas duct.

In the process according to the present invention, infrasonic waves are generated inside an infrasound device comprising a first chamber and a second chamber, both first and second chamber being connected to each other by a tube, said infrasonic waves being generated by an exciter inside the first chamber providing infrasound pulses to said conveying fluid blown at least partially inside said first chamber, said generated infrasonic waves being transported through the tube to reach the second chamber.

More preferably, in the process according to the present invention, the first chamber is divided into a first compartment and a second compartment, said first compartment being in connection to said second compartment through a passing hole, said first compartment comprising an internal channel inside which a moving piston is moved from a first position to a second position and from said second position to said first position by a power source, located externally with respect to the first chamber and forming the exciter, said internal channel being concentrically installed inside said first compartment, said infrasonic waves being generated by the moving piston and transported by said conveying fluid from said first compartment, to said second compartment, through the passing hole before being transported through the tube to reach the second chamber. The conveying fluid can be blown through the piston.

In another advantageous embodiment, rotation controllers are included for exciter power source (motor) to avoid inappropriate working frequencies and for increasing efficiency and safety.

In an advantageous embodiment according to the present invention, the process further comprises a step of deriving a portion of said conveying fluid blown by the blower before entering the first compartment or from the first compartment and introducing it inside the second chamber.

Indeed, the existing plant for treating flue gases have been dimensioned according to specific calibration between existing blowers, pneumatic conveying pipeline and pipe duct, dimension of powdery sorbent dosing device and the like.

When the process according to the present invention is to be carried out in existing plants, there is very often a need to adapt an sonic device, in particular an infrasound device to existing plants and sometimes, also, to the length of the first pneumatic conveying pipeline (especially between the dosing device and the flue gas duct) which is very long (more than 100 m) depending on the size of the plant or the constraint of the plant.

Typically, the powdery sorbent feeding rate can be from a plant to another plant from 30 kg/h to 1200 kg/h; the volume flow rate of the powdery sorbent can vary from $130m^3/h$ to $800\ m^3/h$ and the pressure of the conveying fluid blown by the blower can vary from 170 mbar to 900 mbar depending on the capabilities of the plant.

Of course, in some cases, when all the conveying fluid is blown by the blower at a high pressure due to the capacity of the plant, this high pressure cannot enter the first chamber without causing damages to the sonic waves, in particular the infrasonic waves quality or to the sonic device, in particular the infrasound device in itself.

It has been therefore foreseen according to the present invention to provide a sonic device, in particular an infrasound device, which is flexible enough to adapt to many plant capacities thereby allowing to derive a portion of the blown conveying fluid directly to the said second chamber as an operating possibility of the sonic, in particular infrasound, device.

In a particular embodiment, the powdery sorbent is selected from the group consisting of hydrated lime, hydrated or semi-hydrated dolime, limestone, dolomite, quick lime, quick dolime, sodium carbonate or bicarbonate, sodium sesquicarbonate dihydrate (also known as Trona), halloysite, sepiolite, a carbonaceous organic compound selected from active carbon and lignite coke, fly ash or a mixture of any of these compounds.

In a particular embodiment, the powdery sorbent is preferably a mainly mineral powdery sorbent, meaning that it can be mainly mineral by nature but can contain typically 30 weight % or less, in particular 20 weight % or less, more particularly 15% or less of carbonaceous organic compound selected from active carbon and lignite coke with respect to the weight of the powdery sorbent.

The powdery material, in particular the powdery sorbent is preferably a mainly calcitic mineral sorbent containing an amount of calcic sorbent greater than 50 weight %, in particular greater than 70% with respect to the weight of the powdery sorbent, preferably chosen in the group consisting of hydrated lime, hydrated or semi-hydrated dolime, limestone, dolomite, quick lime, quick dolime, or a mixture of any of these compounds.

In yet another preferred embodiment, said conveying fluid is air, inert gas, exhaust gases, or mixture thereof.

In a further preferred embodiment, infrasonic waves transported inside said first pneumatic conveying pipeline during said transport of powdery sorbent also contacts said dosing means, which increase the accuracy of the amount delivered reducing potential clogging of the dosing means without damaging the dosing device.

In another preferred embodiment, infrasonic waves travels inside said first pneumatic conveying pipeline during said transport of powdery sorbent and preferably also travels (or is distributed) up to the flue gas duct.

In another preferred embodiment in the process according to the present invention, infrasonic waves transported inside said first pneumatic conveying pipeline during said transport of powdery sorbent are prevented to reach the blower due to an Helmholtz bass trap connected to said first chamber or preferably on the pipeline between the blower and the first chamber.

In a particular embodiment according to the present invention, the process further comprised an emergency mode and an operating mode, wherein in emergency mode, the blown transport air is prevented from entering said first chamber and is diverted and blown directly to said first pneumatic conveying pipeline, downstream of the sonic device and wherein in operating mode, the blown conveying fluid is provided at least partially to said first chamber.

Other embodiments of the process according to the present invention are mentioned in the appended claims.

The present invention also relates to a device for improving capture of polluting compounds from flue gases defined in claim 11.

The device according to the present comprises a sonic device connected to said first pneumatic conveying pipeline and provided to generate sonic waves inside said first pneumatic conveying pipeline and/or up to said flue gas duct, said sonic device being further provided to counteract on a fluctuation step of the pressure drop in said first pneumatic conveying pipeline and/or up to said flue gas duct.

Advantageously, the device according to the present invention further comprises a mixing device located between said dosing means and said first pneumatic conveying pipeline, provided to mix said powdery sorbent in said conveying fluid.

In a preferred embodiment, the device according to the present invention further comprises a connecting device located between said dosing means and said first pneumatic conveying pipeline. Further in some embodiments, the dosing device and the mixing device are integrated in a single device.

In a preferred embodiment, the device for improving capture of polluting compounds from flue gases according to the present invention, further comprises a cooling device located between said blower and said first pneumatic conveying pipeline.

The sonic device provided to generate sonic waves is an infrasound device provided to generate infrasonic waves.

Said infrasound device comprises a first and a second chamber, both first and second chamber being connected to each other by a tube, said first chamber comprising an exciter located inside said first chamber, provided to generate said infrasonic waves by providing infrasound pulses to said conveying fluid blown at least partially inside said first chamber, said generated infrasonic waves being transported through the tube acting as a resonance pipeline to reach the second chamber.

In a particularly preferred embodiment, the first chamber is divided into a first compartment and a second compartment, said first compartment being in connection to said second compartment through a passing hole, said first compartment comprising an internal channel inside which a moving piston is moved from a first position to a second position and from said second position to said first position by a power source, located externally with respect to the first chamber and forming the exciter, said internal channel being concentrically installed inside said first compartment, said infrasonic waves being generated by the moving piston and transported by said conveying fluid from said first compartment, to said second compartment, through the passing hole before being transported through the tube to reach the second chamber.

In the present invention, said sonic device is connected to said blower and to the first pneumatic conveying pipeline.

In a variant embodiment, said sonic device is connected to a second blower and to the first pneumatic conveying pipeline between the powdery sorbent storage tank and the flue gas duct.

In another variant embodiment according to the invention, said sonic device is connected to a second blower and to the first pneumatic conveying pipeline between the powdery sorbent storage tank and the blower.

The device comprises an adjustable flowrate distributor pipe connected at a first end either to the blower, between the blower and the first chamber or to the first chamber, preferably to the first compartment of the first chamber and at a second end to the second chamber, said adjustable flowrate distributor pipe being provided for deriving a portion of said conveying fluid blown by the blower and introducing it inside the second chamber.

In a particular embodiment, the powdery sorbent storage tank is a powdery sorbent storage tank of powdery sorbent selected from the group consisting of hydrated lime, hydrated or semi-hydrated dolime, limestone, dolomite, quick lime, quick dolime, sodium carbonate or bicarbonate, sodium sesquicarbonate dihydrate (also known as Trona), halloysite, sepiolite, a carbonaceous organic compound selected from active carbon and lignite coke, fly ash or a mixture of any of these compounds.

Particularly, said conveying fluid is air, inert gas, exhaust gases, or mixture thereof.

In a preferred embodiment, the device according to the present invention comprises an Helmholtz bass trap connected to said first chamber or preferably on the pipeline between the blower and the first chamber, provided to prevent infrasonic waves transported inside said first pneumatic conveying pipeline during said transport of powdery sorbent to reach the blower.

In a further preferred embodiment, the device according to the present invention comprises an emergency device having a first position being an emergency position and a second position being an operating position, said emergency device comprising a switch connected to an emergency pipe connecting directly the blower to the first pneumatic conveying pipeline, downstream the infrasound device, said emergency position being a position wherein the switch prevents the blown conveying fluid from entering said first chamber and diverting it directly to said first pneumatic conveying pipeline, downstream the infrasound device and wherein the operating position is a position wherein the blown conveying fluid is provided at least partially to said first chamber.

In the device according to the present invention, said first signal is such as wind speed of environment at the outlet of the chimney, atmospheric pressure of environment at the outlet of the chimney or outside said flue gas duct, temperature of the flue gas, nature of the fuel, sulfur content of the fuel, sulfur content of the flue gas, chloride content of the flue gas, mercury content of the flue gas, chloride content of material to be burned or to be heated or melted, sulfur content of material to be burned or to be heated or melted, mercury content of material to be burned or to be heated or melted, and their combination.

In a preferred embodiment of the device according to the present invention, said dosing means is selected from a dosing screw, a rotating valve with a vertical shaft or an horizontal shaft, an air slide, a jet feeder, a screw-feeder, an airlock-feeder, a screw pump, a pressure vessel, an air lift, said dosing means being located between said powdery sorbent storage tank and said first pneumatic conveying pipeline being provided to be contacted by sonic waves, in particular infrasonic waves, transported inside said first pneumatic conveying pipeline during said transport of powdery sorbent.

Other embodiments of the device according to the present invention are mentioned in the appended claims

Other characteristics and advantages of the present invention will be derived from the non-limitative following description, and by making reference to the drawings and the examples.

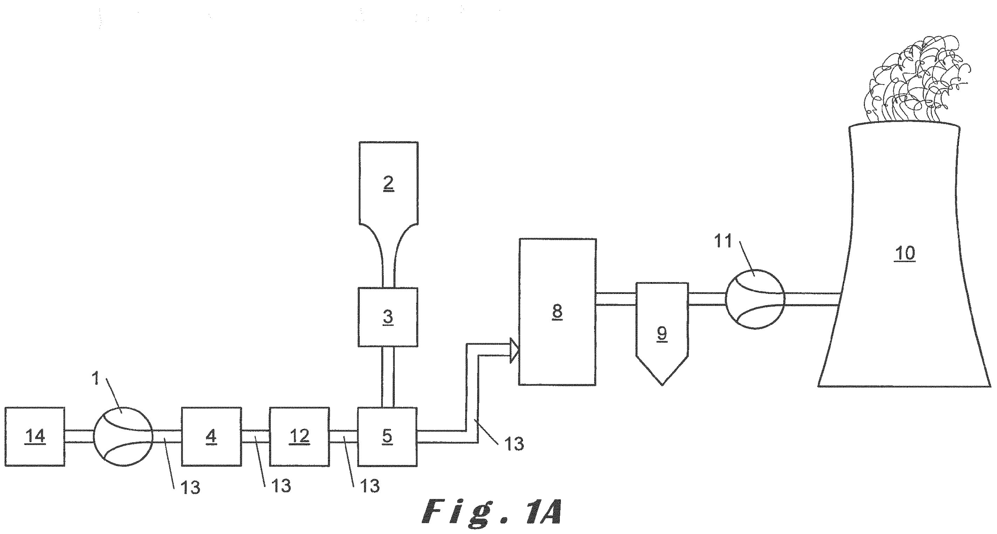

In the drawings, figure 1A is a schematic representation of a heating process where pneumatic conveying of a powdery material according to the present invention is performed.

Figure 1B is another schematic representation of a heating process where pneumatic conveying of a powdery material according to the present invention is performed.

Figure 1C is another schematic representation of a heating process where pneumatic conveying of a powdery material according to the present invention is performed at different possible locations.

Figure 1D is another schematic representation of a heating process where pneumatic conveying of a powdery material according to the present invention is performed.

Figure 2 is a schematic representation of a pneumatic conveying of a powdery material, where the sonic device is located in line with the pneumatic conveying pipeline.

Figure 3 is a schematic representation of a pneumatic conveying of a powdery material, where the sonic device is located in parallel with the pneumatic conveying pipeline.

Figure 4 is a schematic representation of a pneumatic conveying of a powdery material, where the sonic device is located in parallel with its own blower with the pneumatic conveying pipeline.

Figure 4A is a schematic representation of a multilines pneumatic conveying of a powdery material.

Figure 5 is a Jenicke flow diagram for powdery material showing the cohesive behavior of the powdery material when it is hydrated lime.

Figure 6 is a graph showing the pressure trends in the first pneumatic conveying pipeline where the first curve shows the pressure drop over time in one pneumatic conveying pipeline 13' without an infrasound device and the second curve shows the pressure drop over time in another pneumatic conveying pipeline 13 without infrasound device.

Figure 6 A is a graph showing the pressure trends in the first pneumatic conveying pipeline where the first curve shows the pressure drop over time in one pneumatic conveying pipeline 13' WITH an infrasound device and the second curve shows the pressure drop over time in another pneumatic conveying pipeline 13 without infrasound device.

Figure 7 illustrates schematically the plants where the example was carried out.

In the drawings, the same reference numbers have been allocated to the same or analog element.

As it can be seen in figure 1A, a heating process typically comprises a heating unit such as a heat exchanger (for example a boiler), an incinerator or a furnace 8 which is followed by a filtering unit and/or a scrubber 9. In the heating unit 8, flue gases are contained in a flue gas duct (not illustrated) and exit the heating unit 8 to enter the filtering unit and/or a scrubber 9 from which the flue gas is passing through a blower (fan) 11 and evacuated to the chimney 10. It is obvious that even if only one item is represented as equipment 9, there can be consecutive filter and scrubber units, in whatever order, connected by a duct, depending of the flue gas treatment facility of the plants.

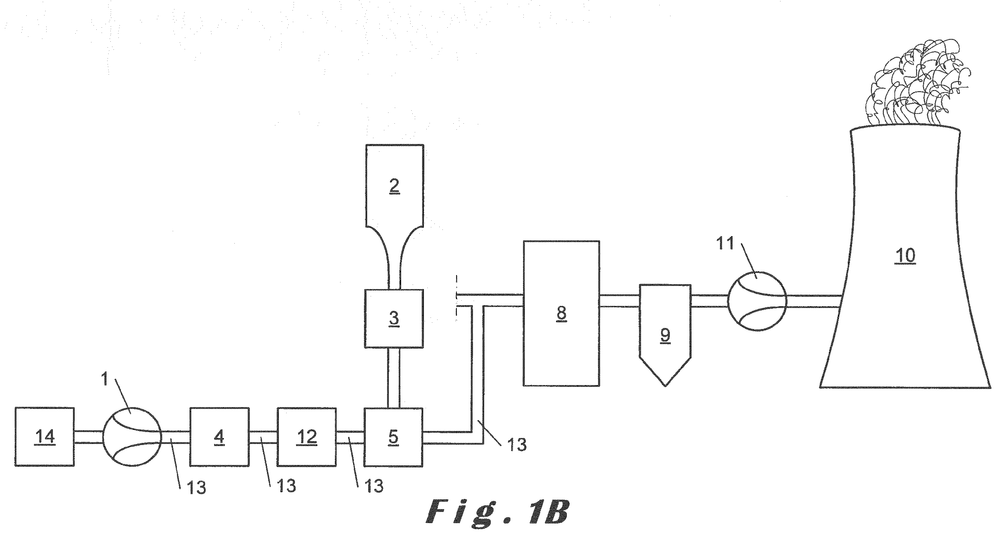

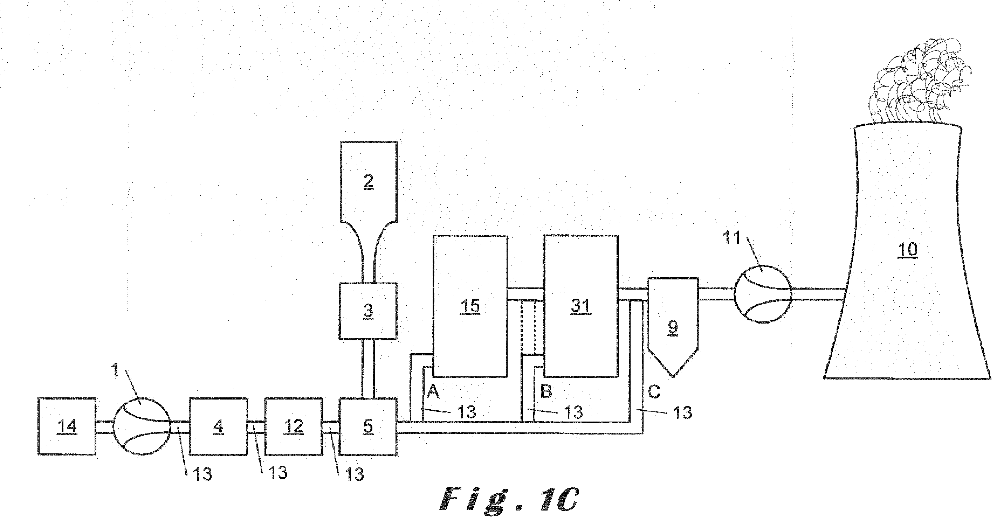

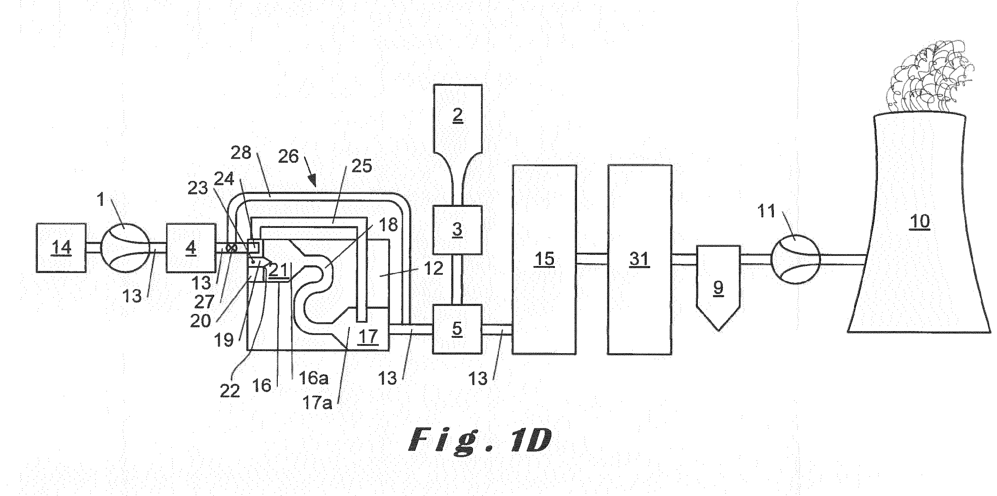

The heating process illustrated in figure 1 can be a burning process where a furnace 8 is present such as coal, lignite or biomass furnace, cement furnace, lime furnace, glass furnace, metal ore, in particular iron ore, furnace, recycling material furnace or even an incinerator 8 burning for example garbage.

The heating process as illustrated here can also be a process comprising a boiler 8 recovering heat energy from a former step. The boiler 8 can recover the energy from a former burning step in a furnace or in a burner 15 (see figure 1C) or from another burning step.

The flue gases can come from the combustion or heating or smelting of the material (garbage, iron ore is a steel plant, limestone, silica) to be burned or from the fuel (coke, coal, gas, lignite, petroleum liquid fuels, ...)

For this reason, industries, called herein after "burning industries" using burners such as garbage incinerator, but also industries using furnaces are more and more controlling polluting compounds emission in flue gas treatment to stick with environmental requirements.

The treatment of gases, in particular flue gases, requires abatement of acid gases, notably HCl, $SO_2$ and/or HF, which reduction may be carried out under dry conditions, by injecting a substance, often mineral, dry and powdery into a flue gas flow or through a filter-bed comprising solid particles either fixed or in motion. In this case, the powdery compound generally comprises a calcium-magnesium compound, in particular lime, preferably slaked or hydrated lime or a sodium compound like a sodium carbonate or bicarbonate. Other compounds may also be used notably those used for reducing dioxins, furans and/or heavy metals including mercury, for example carbonaceous substance like active carbon or lignite coke or mineral substance, like those based on phyllosilicates, such as sepiolite or halloysite or the like.

As flue gas contains polluting compounds which have to be removed, very often powdery material, in particular powdery sorbent is injected in the flue gas duct to capture a certain level of polluting compounds.

To inject a powdery material, for example a powdery sorbent, the process plant comprises a blower 1 which is connected to a first pneumatic conveying pipeline 13 and blows conveying fluid, such as for example air, inert gas, exhaust gases, or mixture thereof in the first pneumatic conveying pipeline 13.

A powdery material, in particular a powdery sorbent storage tank 2 is connected to the first pneumatic conveying pipeline 13 through a dosing means 3. The first pneumatic conveying pipeline 13 comprising a pipeline wall is connected to said powdery material, in particular said powdery sorbent storage tank 2 and to the flue gas duct of the heating unit 8 and pursue downstream of the heating unit 8.

The conveying fluid has a flow comprising boundary layer along said pipeline wall, but also the particles of said powdery material have a boundary layer around them inside said conveying flow.

The powdery material, in particular the powdery sorbent is therefore pneumatically conveyed in the first pneumatic conveying pipeline 13 from the powdery material, in particular a powdery sorbent, storage tank 2 to the flue gas duct of the heating unit 8 and pursue downstream of the heating unit 8 by a flow of conveying fluid generated by the blower 1 and blowing conveying fluid inside said first pneumatic conveying pipeline 13 in which particles of said powdery material, in particular said powdery sorbent are transported.

The dosing means 3 doses an amount of said powdery material, in particular said powdery sorbent when entering from said powdery material, in particular said powdery sorbent storage tank 2 into said first pneumatic conveying pipeline 13.

The dosing means 3 are preferably selected from a dosing screw, a rotating valve with a vertical shaft or an horizontal shaft, an air slide, a jet feeder, a screw-feeder, an airlock-feeder, a screw pump, a pressure vessel, an air lift or the like.

The powdery material, in particular the powdery sorbent contained in the powdery material storage tank 2 is selected from the group consisting of hydrated lime, hydrated or semi-hydrated dolime, limestone, dolomite, quick lime, quick dolime, sodium carbonate or bicarbonate, sodium sesquicarbonate dihydrate (also known as Trona), halloysite, sepiolite, a carbonaceous organic compound selected from active carbon and lignite coke, fly ash or a mixture of any of these compounds.

In the illustrated embodiment, a drying device 14 is provided to dry the conveying fluid before entering in the blower 1. A cooling device 4 is also provided to cool the conveying fluid after being blown by said blower into the first pneumatic conveying pipeline 13 to further convey in the first pneumatic conveying pipeline 13 a dried conveying fluid. A mixing or connecting device 5 is also present in the process plant allowing the mixing of the conveying fluid blown by said blower 1 and the powdery material, in particular the powdery sorbent dosed by said dosing means 3.

More specifically, a mixing device comprises a first feeding tube where the conveying fluid in the first pneumatic conveying pipeline is entering a mixing chamber to which the first feeding tube is connected and a second feeding tube connected to said dosing means 3 and to said mixing chamber for feeding the powdery material. During feeding of powdery material and the conveying fluid, an homogeneous mixture of the powdery material and the blown conveying fluid is performed, which leaves the mixing chamber to pursue its transport through said first pneumatic conveying pipeline 13 to said flue gas duct in the furnace or blower 8. In the first pneumatic conveying pipeline, downwards the mixing chamber, the particles are conveyed and spread properly in the conveying fluid. The particles of the powdery material in the conveying fluid are fed in the bottom of the furnace or boiler 8, especially, in the flue gas duct.

A sonic device 12 is located or connected at any location between the blower and the flue gas duct, preferably, as shown herein, between the blower and the mixing device 5. The sonic device 12 generates sonic waves inside said first pneumatic conveying pipeline and/or up to said flue gas duct. In this illustrated preferred embodiment, the blower 1 connected to said first pneumatic conveying pipeline 13 is blowing conveying fluid inside said first pneumatic conveying pipeline 13 but also blows said conveying fluid at least partially through said sonic device 12.

In this illustrated embodiment, said dosing means 3 located between said powdery sorbent storage tank 2 and said first pneumatic conveying pipeline 13 is also contacted by sonic waves transported inside said first pneumatic 13 conveying pipeline during said transport of powdery sorbent.

By the terms "connected to", it is meant that one element is connected to another element directly or indirectly, meaning that the elements are in communication one to each other but other elements can be inserted in between.

By the terms pneumatic conveying of powdery material, it is meant within the scope of the invention pneumatic conveying by negative pressure or by positive pressure, pneumatic conveying of powdery material as a dense or strand phase or dilute phase, in particular dilute phase, in conveying fluid, or as a discontinuous phase in conveying fluid.

During pneumatic conveying of a powdery material, pressure drop fluctuations occurs at any time, very frequently and are difficult to control. The fluctuations in pressure drop may be due to a number of intrinsic factors of the pneumatic conveying process or to external event.

Such fluctuations of pressure drop are disturbing the entire pneumatic conveying of the powdery material, in particular the powdery sorbent, to be conveyed, causing different kind of perturbations. Amongst other perturbations, one can found the fact that the fluctuations in pressure drop is causing a modification of the conveying velocity of the powdery sorbent.

As explained in the beginning, powdery sorbent flows have a saltation velocity under which the powdery material, in particular the powdery sorbent, starts settling in the pneumatic conveying pipe while conveying fluid blown by blowers is given a safe nominal value of velocity, greater than the saltation velocity to prevent the powdery material, in particular the powdery sorbent, settling inside the pneumatic conveying pipe.

Indeed blowers are characterized by a curve between pressure drop and flowrate. The pressure drop is the one imposed by the plant inside which pneumatic conveying shall be performed and the characterizing curve of the blower impart a flowrate to the pneumatic conveying of the powdery material, in particular the powdery sorbent depending on the value of the pressure drop occurring inside the plant.

As soon as there is a small fluctuation in pressure drop, the pressure drop start decreasing or increasing without it being possible to control it enough quickly for non-disturbing the pneumatic conveying of the powdery material. As a consequence, for example, without again being limited thereto, when the pressure drop increases, the pneumatic velocity or flowrate of the conveying fluid is reduced causing possibly the velocity of the conveying fluid to reach a value lower than the safe nominal value velocity, causing therefore the powdery material, in particular the powdery sorbent, pneumatically conveyed to sediment inside the pneumatic conveying pipeline.

The powdery material starts therefore to accumulate inside the pneumatic conveying pipeline causing on its turn fluctuations of the pressure drop as the passing diameter of the pipeline available for pneumatic conveying is reduced, causing an increase in pressure drop having on its turn consequence on the pneumatic conveying.

As one can understand, the smallest single fluctuation in the pressure drop, which occur whatever the level of optimization of the pneumatic conveying will have strong consequence in the efficiency of the pneumatic conveying of the powdery material, in particular the powdery sorbent, inside the pneumatic conveying pipeline.

This phenomena of fluctuation is occurring in any conveying fluid when blown, but is of course further amplified when a powdery material, is conveyed as the powdery material itself cannot recover easily the right regimen of pressure drop as soon as it starts accumulating inside the pneumatic conveying pipeline.

In the process according to the present invention, the sonic device 12 generates infrasonic waves inside said first pneumatic conveying pipeline 13 up to said flue gas duct in the furnace or in the boiler 8 and provides a counteraction on the fluctuation step of the pressure drop in said first pneumatic conveying pipeline up to said flue gas duct.

It has been indeed surprisingly realized that when infrasonic waves generates an increase of pressure, the increase of pressure has the capability to counteract on the fluctuation step of the pressure drop in said first conveying pipeline and/or in said flue gas duct.

The sonic device preferably creates a pressure drop increase in the first pneumatic conveying pipeline close to the sonic generator of between 20 and 200 mbar, in particular of at least 30 mbar, in particular of at most 150 mbar.

When said sonic device provides a counteraction on the fluctuation step of the pressure drop in said first pneumatic conveying pipeline and/or up to said recipient zone, said sonic device provides a smoothing action and/or a masking action on the fluctuation step of the pressure drop in said first pneumatic conveying pipeline and/or up to said flue gas duct.

The infrasonic waves are used to increase the pressure drop, meaning that the sonic waves according to the present invention are used in such a way that they are able to counteract the fluctuation step of the pressure drop, thereby minimizing perturbations causing the accumulation of powdery material, in particular powdery sorbent, in said pneumatic conveying instead of curing or retro-acting on the accumulation of particles.

In the illustrated preferred embodiment, the counteraction on the fluctuation step of the pressure drop in said first pneumatic conveying pipeline 13 causes the improvement of the polluting compounds capture by reducing fluctuations in powdery sorbent, in particular powdery mineral sorbent, fed in the flue gas duct by sonic waves transported inside said first pneumatic conveying pipeline 13 during said pneumatic conveying of powdery sorbent.

Indeed, it has been found surprisingly that sonic waves transported inside said first pneumatic conveying pipeline during said pneumatic conveying of powdery sorbent has a direct impact on fluctuations in pneumatic conveying of powdery sorbent fed in the flue gas duct.

The appropriated use of circulating sonic waves, creating an increase of the pressure drop inside said first pneumatic conveying pipeline 13 during said transport of powdery sorbent, can solve the fluctuations in the powdery material, in particular the powdery sorbent injected inside the flue gas duct.

The infrasonic waves transported inside said first pneumatic conveying pipeline during said transport of powdery sorbent have been shown to prevent deficiencies in the pollutants capture inside the flue gas duct by counteracting very quickly on fluctuations in the pressure drop, thereby preventing particles not having enough speed to settle and enabling them to be conveyed by the pneumatic transport and as a consequence to still reach the flue gas duct. Indeed, sonic waves are colliding with the particles having a tendency to settle against the wall of the first pneumatic conveying pipeline when they did not have enough speed to be pneumatically conveyed as a result of the existence of boundary layer.

Indeed, the combination of the proper use of the infrasonic waves creating an increase of pressure drop in the first pneumatic conveying pipeline together with the collision between the particles of the powdery sorbent and the sonic waves having fluctuating frequency of the waves that change the location of the antinodes and the vibration nodes of the sound in the pipe.

Therefore, according to the present invention, the sonic waves transported inside said first pneumatic conveying pipeline 13 during said conveying of powdery sorbent have been shown to improve the level of pollutants capture by counteracting fluctuations in the pressure drop in the first pneumatic conveying pipeline 13 and thereby ensuring adequate/optimizing flowrate of powdery sorbent to the flue gas duct in the furnace or boiler 8.

In some cases, fluctuations of pressure drop in the first pneumatic conveying pipeline are due to the operating conditions or to regulation loop due to a first signal given by the process in itself or by a measure or a data.

More and more, burning industries use analyzer at the exit of the flue gas duct to measure level of polluting compounds (example of first signal) and have put in place over time regulation loop in order to retroact on the amount of powdery sorbent used to capture those pollutants. For example, if the level of $SO_2$ starts to increase, the amount of powdery sorbent will be increased to improve the capture of this pollutant. If the level of $SO_2$ starts to decrease, the amount of powdery sorbent will be decreased.

Other "burning industries" are not using continuous analysis but as a precautionary measure, they adjust the amount of powdery sorbent based on several criteria and measurement (first signal), such as the level of sulfur in the fuel which will be used, pre-analysis or data regarding the level of chloride or sulfur present in the garbage to be burned or the material to be heated (metal ore, recycling material...), based on the combustion or the heating step, the turnaround of people conducting the furnace, the primary air level introduced in the furnace to do the combustion of the material to be burned, based on temperature, atmospheric pressure, ... The amount of powdery sorbent is then fixed manually for a predetermined period of time and changed when a new condition (first signal) arises.

More particularly, when a first signal arises from exhaust gases from the combustion of fuel and/or material to be burned, such as an increase in pollutants level, a decrease of pollutants level, the response to be given is to change the amount of powdery sorbent to be introduced inside the flue gas duct. The change in the amount of powdery sorbent which is blown inside the first pneumatic conveying pipeline by the blower yields to a change in the weight ratio between said conveying fluid and said powdery sorbent which creates fluctuations in the pressure drop of the pneumatic transport, thereby causing fluctuations in the powdery material, in particular the powdery sorbent injected inside the flue gas duct.

Indeed, the change in the amount of powdery sorbent causes fluctuations in the operating of the pneumatic conveying system causing itself fluctuations of the conveying fluid flow rate to adapt itself to the counterpressure as the blowing rate stays quite stable at the exit of the blower in the first pneumatic conveying pipeline.

In response to a first signal, changes occur in the weight ratio between said powdery sorbent and said conveying fluid. The particles of the powdery sorbent are conveyed with fluctuating speed in the first pneumatic conveying pipeline which can increase or decrease.

In other cases, said first signal is such as wind speed of environment at the outlet of the chimney, atmospheric pressure of environment at the outlet of the chimney or outside said flue gas duct, temperature of the flue gas, nature of the fuel, sulfur content of the fuel, sulfur content of the flue gas, chloride content of the flue gas, mercury content of the flue gas, chloride content of material to be burned, sulfur content of material to be burned or to be heated, mercury content of material to be burned or to be heated, and their combination.

Figure 1B illustrates a variant embodiment according to the present invention, where the particles of the powdery material in the conveying fluid are fed in a duct entering the heating unit 8.

Figure 1C, as mentioned earlier, illustrates a process where the heating process comprises a boiler 31 recovering heat energy from a furnace or from a burner 15.

Hot flue gases are produced more specifically in the furnace or burner 15 and are conveyed to a boiler 31 for recovering the contained calories, before being transferred to a filtering device and/or a gas scrubber 9. It is obvious that even if only one item is represented as equipment 9, there can be consecutive filter and scrubber units, in whatever order, connected by a duct, depending of the flue gas treatment facility of the plants.

The powdery material can be injected as illustrated in different locations, such as in the furnace 15, including in its after combustion chamber or post-combustion zone (option A), in the boiler 31 (option B), or at the entrance of the filtering device and/or gas scrubber 9 (option C) or in the gas duct in between all those equipment (dashed line) or any combination thereof. It is obvious that in case of multiple equipment 9, the powdery material can be injected in between the various equipment 9, in the duct between or at the entrance of one or more of the units 9.

The first pneumatic conveying pipeline shall be depending on the several options connected to the furnace or its after combustion chamber or post-combustion zone (option A), to the boiler (or any other heat exchanger) 31 (option B), or to the filtering (or scrubbing) device 9 (option C) or in the gas duct in between all those equipment or any combination thereof.

In a specific variant according to the present invention, it is also foreseen that multiple conveying pipelines are present, each containing their own sonic device or even that downstream of the sonic device a multiway connector is present and the first multiple conveying pipeline is spread into a bundle of pneumatic conveying pipelines, optionally provided with a closing/opening mechanism to provide more flexibility to the device according to the present invention.

Figure 1D represent the embodiment A illustrated in fig 1C where the sonic device generating sonic waves being an infrasound device generating infrasonic waves is detailed. It is to be noted that the sonic device can be integrated in both variants B and C.

In the infrasound device, infrasonic waves are generated inside an infrasound device 12 comprising a first chamber 16 and a second chamber 17, both first and second chamber being connected to each other by a tube 18, said infrasonic waves being generated by an exciter 19 inside the first chamber 16 providing infrasound pulses to said conveying fluid blown at least partially inside said first chamber 16, said generated infrasonic waves being transported through the tube to reach the second chamber 17 wherein the first chamber is divided into a first compartment 20 and a second compartment 21. The first compartment 20 is connected to the second compartment 21 through a passing hole 22 and comprises an internal channel inside which a moving piston is moved from a first position to a second position and from said second position to said first position by a power source 23, located externally with respect to the first chamber 16 and forming the exciter. The internal channel is concentrically installed inside said first compartment 20.

Infrasonic waves are generated by the moving piston and transported by said conveying fluid from said first compartment 20 to said second compartment 21, through the passing hole 22 before being transported through the tube 18 to reach the second chamber 17.

The conveying fluid blown by said blower 1 reaches the first compartment of the first chamber to enter the infrasound device through feed line 24. The first chamber 16 is followed by a tapered section 16a to the connection with the tube acting as a resonance tube 18. The conveying fluid follows the tube 18 to reach a second expansion tapered section 17a having a widening section in the direction of the second chamber 17 to which it is connected.

In a preferred embodiment, further comprising an adjustable flowrate distributor pipe 25 connected at a first end either to the blower 1, between the blower 1 and the first chamber 16 or to the first chamber 16, preferably to the first compartment 20 and at a second end to the second chamber 17. Said adjustable flowrate distributor pipe 25 is provided for deriving a portion of said conveying fluid blown by the blower 1 and introducing it inside the second chamber 17.

In another preferred embodiment, the device according to the present invention further comprises an Helmholtz bass trap (not illustrated) connected to said first chamber 16 or preferably on the pipeline between the blower and the first chamber. The Helmholtz bass trap is provided to prevent infrasonic waves transported inside said first pneumatic conveying pipeline 13 during said transport of powdery sorbent to reach the blower 1.

In another preferred embodiment as shown in Fig 1D, the device according to the present invention comprises an emergency device 26 having a first position being an emergency position and a second position being an operating position, said emergency device comprising a switch 27 connected to an emergency pipe 28 connecting directly the blower 1 to the first pneumatic conveying pipeline 13, downstream the infrasound device 12. The switch 27 can be a 3-Way valve installed in connection point as drawn and so all the blown conveying fluid go through emergency pipe 28 or can be a 2-ways valve inserted in any position in pipe 28 allowing the blown conveying fluid to be conveyed ( totally or partially depending of the position of the moving piston in the internal channel ) downstream the infrasound device 12.

The emergency position being a position wherein the switch 27 prevents the blown conveying fluid from entering said first chamber 16 and diverting it directly to said first pneumatic conveying pipeline 13, downstream the infrasound device 12 and wherein the operating position is a position wherein the blown conveying fluid is provided at least partially to said first chamber 16.

The infrasonic device operates at low pressure, meaning that the pressure inside the infrasonic device is oscillating around the atmospheric pressure but stays lower that 1,5 absolute bar.

The generated infrasonic waves are high power waves between 150 and 170 dB. The entering conveying fluid is fed at a pressure around 1,25 bar. The piston 23 propels the conveying fluid from the entry for the conveying fluid 24. The power source drives the piston for ensuring its movement. The preferred diameter of the piston is comprised between 50 and 150 mm. The piston moves from a first position to a second position inside a jacket connected to the first compartment 20. The jacket comprises holes of a first type allowing the jacket to be in fluid connection with the conveying fluid entry 24. In addition, the piston 23 comprises a head also provided with holes of a second type.

The jacket is located inside a the first compartment 20 in fluid connection with the conveying fluid entry 24. During the displacement of the piston 23 from the first position to the second position, the holes of the second type moves gradually in front of the holes of the first type, allowing gradually the conveying fluid to travels from the first compartment 20 to the second compartment 21. When the piston 23 is in the first position, the holes of the first type co-channel with the holes of the second type, fully allowing the passage of the conveying fluid (open position). When the piston 23 is in the second position, the holes of the first type does not co-channel with the holes of the second type, preventing therefore the passage of the conveying fluid (closing position).

The generator of infrasonic pulses generates downstream the oscillation of the conveying fluid at a sonic frequency, which is in the case of infrasonic waves, lower than 30Hz, preferably around 20 Hz. The generation of the pulse, i.e. the moving of the piston 23 generates a fluctuation of the pressure in the conveying fluid at a sonic frequency which propagates through the piping of the device.

The first chamber causes a reduction of the power of the oscillations, but increases the bandwidth. Indeed, because a resonance tube is provided, the frequency may vary from +0,5 to -0,5 Hz which changes the location of the antinodes and the vibration nodes of the sound in the first pneumatic conveying pipeline.

Preferably the diameter of the basis of the tapered section 16a is comprised between 350 to 500 mm and the diameter of the top of the tapered section 16a is comprised between 150 and 219 mm. The resonance tube 18 has a diameter comprised between 150 and 300 mm and a length of X/4 where X is the wavelength of the infrasonic signal. The resonance tube 18 allow the conveying fluid to start resonance. The basis of the tapered section 17a is comprised between 150 and 300 mm and the top of the tapered section 17a has a diameter comprised between 400 and 600 mm. The second chamber 17 allows to propagate the oscillations for ensuring the transmission to the powdery material. The length of the second chamber 17 is about 750 mm and the diameter is comprised between 400 and 600 mm.

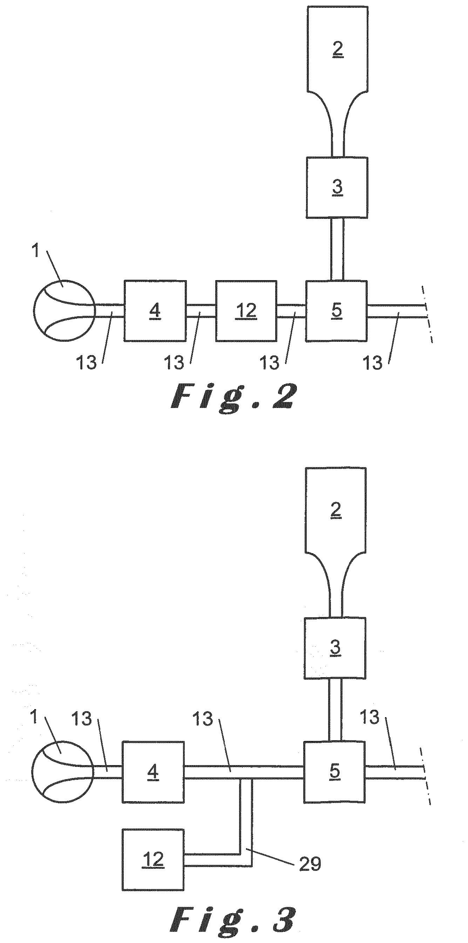

Figures 2 to 4 illustrate, without being limited thereto preferred location of the sonic device in a pneumatic conveying system.

In other embodiment, the sonic device can also be located downstream the storage tank

In those embodiment illustrated in figure 2 to 4, the first pneumatic conveying pipeline can be connected to, as in figures 1A to 1D to a furnace, an incinerator, a boiler, a filter, a scrubber or even to a silo. This has been mentioned in the following a recipient zone.

According to the present invention, by the terms recipient zone, it is meant a silo for collecting the powdery sorbent, a channel where the powdery material, in particular the powdery sorbent shall be injected through pneumatic conveying, such as a flue gas duct, a pipeline inside a plant, gas scrubbers, filters devices, such as electrostatic precipitator, bag filters, ...

Fig 2 illustrates schematically a pneumatic conveying system to convey a powdery material, for example a powdery sorbent.

The pneumatic conveying system comprises a blower 1 is connected to a first pneumatic conveying pipeline 13 and blows conveying fluid, such as for example air, inert gas, exhaust gases, or mixture thereof in the first pneumatic conveying pipeline 13.

A powdery material, in particular a powdery sorbent storage tank 2 is connected to the first pneumatic conveying pipeline 13 through a dosing means 3. The first pneumatic conveying pipeline 13 comprising a pipeline wall is connected to said powdery material, in particular said powdery sorbent storage tank 2 and the recipient zone

The conveying fluid has a flow comprising boundary layer along said pipeline wall, but also the particles of said powdery material have a boundary layer around them inside said conveying flow.

The powdery material, in particular the powdery sorbent is therefore pneumatically conveyed in the first pneumatic conveying pipeline 13 from the powdery material, in particular a powdery sorbent storage tank 2 to the flue gas duct in the recipient zone (not illustrated) by a flow of conveying fluid generated by the blower 1 and blowing conveying fluid inside said first pneumatic conveying pipeline 13 in which particles of said powdery material, in particular said powdery sorbent are transported.

The dosing means 3 doses an amount of said powdery material, in particular said powdery sorbent when entering from said powdery material, in particular said powdery sorbent storage tank 2 into said first pneumatic conveying pipeline 13.

The dosing means 3 are preferably selected from a dosing screw, a rotating valve with a vertical shaft or an horizontal shaft, an air slide, a jet feeder, a screw-feeder, an airlock-feeder, a screw pump, a pressure vessel, an air lift.

The powdery material, in particular the powdery sorbent contained in the powdery material storage tank 2 is selected from the group consisting of hydrated lime, hydrated or semi-hydrated dolime, limestone, dolomite, quick lime, quick dolime, sodium carbonate or bicarbonate, sodium sesquicarbonate dihydrate (also known as Trona), halloysite, sepiolite, a carbonaceous organic compound selected from active carbon and lignite coke, fly ash or a mixture of any of these compounds.

In the illustrated embodiment, a drying device 4 is also provided to dry the conveying fluid after being blown by said blower to in the first pneumatic conveying pipeline 13 to further convey in the first pneumatic conveying pipeline 13 a dried conveying fluid. A mixing or connecting device 5 is also present in the process plant allowing the mixing of the conveying fluid blown by said blower 1 and the powdery material, in particular the powdery sorbent dosed by said dosing means 3.

More specifically, the mixing device comprises a first feeding tube where the conveying fluid in the first pneumatic conveying pipeline is entering a mixing chamber to which the first feeding tube is connected and a second feeding tube connected to said dosing means 3 and to said mixing chamber for feeding the powdery material. During feeding of powdery material and the conveying fluid, an homogeneous mixture of the powdery material and the blown conveying fluid is performed, which leaves the mixing chamber to pursue its transport through said first pneumatic conveying pipeline 13 to said recipient zone. In the first pneumatic conveying pipeline, downwards the mixing chamber, the particles are conveyed and spread properly in the conveying fluid.

A sonic device 12 is located or connected at any location between the blower and the flue gas duct, preferably, as shown herein, between the blower and the mixing device 5. The sonic device 12 generates sonic waves inside said first pneumatic conveying pipeline and/or up to said recipient zone. In this illustrated preferred embodiment, the blower 1 connected to said first pneumatic conveying pipeline 13 is blowing conveying fluid inside said first pneumatic conveying pipeline 13 but also blows said conveying fluid at least partially through said sonic device 12.

In this illustrated embodiment, said dosing means 3 located between said powdery material storage tank 2 and said first pneumatic conveying pipeline 13 is also contacted by sonic waves transported inside said first pneumatic 13 conveying pipeline during said transport of powdery material.

By the terms "connected to", it is meant that one element is connected to another element directly or indirectly, meaning that the elements are in communication one to each other but other elements can be inserted in between.

By the terms pneumatic conveying of powdery material, it is meant within the scope of the invention pneumatic conveying by negative pressure or by positive pressure, pneumatic conveying of powdery material as a dilute phase in conveying fluid, or as a discontinuous phase in conveying fluid.

During pneumatic conveying of a powdery material, pressure drop fluctuations occurs at any time, very frequently and are difficult to control. The fluctuations in pressure drop may be due to a number of intrinsic factor of the pneumatic conveying process or to external event.

Such fluctuations of pressure drop are disturbing the entire pneumatic conveying of the powdery material to be convey causing different kind of perturbations. Amongst other perturbations, one can found the fact that the fluctuations in pressure drop is causing a modification of the conveying velocity of the powdery material.

As explained in the beginning, powdery material flows have a saltation velocity under which the powdery material, in particular the powdery sorbent start settling in the pneumatic conveying pipe while conveying fluid blown by blowers are given a safe nominal value of velocity, greater than the saltation velocity to prevent the powdery material, in particular the powdery sorbent settling inside the pneumatic conveying pipe.

Indeed blowers are characterized by a curve between pressure drop and flowrate. The pressure drop is the one imposed by the plant inside which pneumatic conveying shall be performed and the characterizing curve of the blower impart a flowrate to the pneumatic conveying of the powdery material, in particular the powdery sorbent depending of the value of the pressure drop occurring inside the plant.

As soon as there is a small fluctuation in pressure drop, the pressure drop start decreasing and increasing without it being possible to control it enough quickly for non-disturbing the pneumatic conveying of the powdery material. As a consequence, for example, without again being limited thereto, when the pressure drop increases, the pneumatic velocity or flowrate of the conveying fluid is reduced causing possibly the velocity of the conveying fluid to reach a value lower than the safe nominal value velocity, causing therefore the powdery material, in particular the powdery sorbent pneumatically conveyed to sediment inside the pneumatic conveying pipeline.

The powdery material starts therefore to accumulate inside the pneumatic conveying pipeline causing on its turn fluctuations of the pressure drop as the passing diameter of the pipeline available for pneumatic conveying is reduced, causing an increase in pressure drop having on its turn consequence on the pneumatic conveying.

As one can understand, the smallest single fluctuation in the pressure drop, which occur whatever the level of optimization of the pneumatic conveying will have strong consequence in the efficiency of the pneumatic conveying of the powdery material, in particular the powdery sorbent inside the pneumatic conveying pipeline.

This phenomena of fluctuation is occurring in any conveying fluid when blown, but is of course further amplified when a powdery material, is conveyed as the powdery material itself cannot recover easily the right regimen of pressure drop as soon as it starts accumulating inside the pneumatic conveying pipeline.

In the process according to the present invention, the sonic device 12 generates sonic waves inside said first pneumatic conveying pipeline 13 up to said recipient zone and provides a counteraction on the fluctuation step of the pressure drop in said first pneumatic conveying pipeline up to said recipient zone.

It has been indeed surprisingly realized that when sonic waves generates an increase of pressure, the increase of pressure has the capability to counteract on the fluctuation step of the pressure drop in said first conveying pipeline and/or in said recipient zone.

The sonic device preferably creates a pressure increase in the first pneumatic conveying pipeline close to the sonic generator of between 20 and 200 mbar, in particular of at least 30 mbar preferably of at most 150mbar.

Preferably, when said sonic device provides a counteraction on the fluctuation step of the pressure drop in said first pneumatic conveying pipeline and/or up to said recipient zone, said sonic device provides a smoothing action and/or a masking action on the fluctuation step of the pressure drop in said first pneumatic conveying pipeline and/or up to said recipient zone.

The sonic waves are used to increase the pressure drop, meaning that the sonic waves according to the present invention are used in such a way that they are able to counteract the fluctuation step of the pressure drop, thereby minimizing perturbations causing the accumulation of powdery material in said pneumatic conveying instead of curing or retro-acting on the accumulation of particles.

In the illustrated preferred embodiment, the counteraction on the fluctuation step of the pressure drop in said first pneumatic conveying pipeline 13 causes the improvement of the pollutant compounds capture by reducing fluctuations in powdery material, in particular powdery mineral material, fed in the flue gas duct by sonic waves transported inside said first pneumatic conveying pipeline 13 during said pneumatic conveying of powdery material.

Indeed, it has been found surprisingly that sonic waves transported inside said first pneumatic conveying pipeline during said pneumatic conveying of powdery material has a direct impact on fluctuations in pneumatic conveying of powdery material fed in the recipient zone.

The appropriated use of travelling sonic waves, creating an increase of the pressure drop inside said first pneumatic conveying pipeline 13 during said transport of powdery material, can solve the fluctuations in the powdery material, in particular the powdery sorbent injected inside the recipient zone.

The sonic waves transported inside said first pneumatic conveying pipeline during said transport of powdery material have been shown to prevent deficiencies in the pollutants capture inside the flue gas duct by counteracting very quickly on fluctuations in the pressure drop, thereby preventing particles not having enough speed to settle and enabling them to be conveyed by the pneumatic transport and as a consequence to still reach the flue gas duct. Indeed sonic waves are colliding with the particles having a tendency to settle against the wall of the first pneumatic conveying pipeline when they did not have enough speed to be pneumatically conveyed as a result of the existence of boundary layer.

Indeed, the combination of the proper use of the sonic waves creating an increase of pressure drop in the first pneumatic conveying pipeline together with the collision between the particles of the powdery material and the sonic waves having fluctuating frequency of the waves that change the location of the antinodes and the vibration nodes of the sound in the pipe.

Figure 3 illustrates another possible location of a sonic device in a pneumatic conveying system according to the present invention.

As it can be seen, in this embodiment, the sonic device is not located in the first pneumatic conveying pipeline 13 but instead is placed in parallel and is connected to the first pneumatic conveying pipeline 13 through an exit duct 29 reaching the first pneumatic conveying pipeline before the mixing device. The sonic device is a dead-end device.

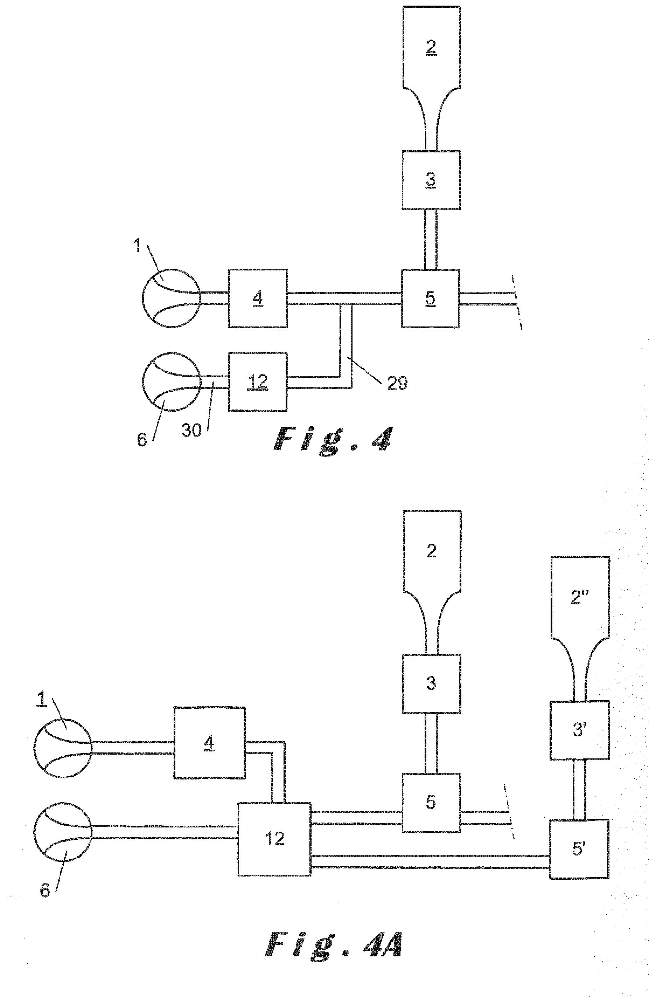

Figure 4 illustrates another possible location of a sonic device in a pneumatic conveying system according to the present invention.

As it can be seen, in this embodiment, the sonic device is not located in the first pneumatic conveying pipeline 13 but instead is placed in parallel and is connected to the first pneumatic conveying pipeline 13 through an exit duct 29 reaching the first pneumatic conveying pipeline before the mixing device. The sonic device 12 is a blow through device and is connected by an entry duct 30 to another blower 6.

Figure 4A is showing a multiline pneumatic conveying system wherein one sonic device 12 is located upstream of the dosing means 5 of both illustrated pneumatic conveying pipelines.

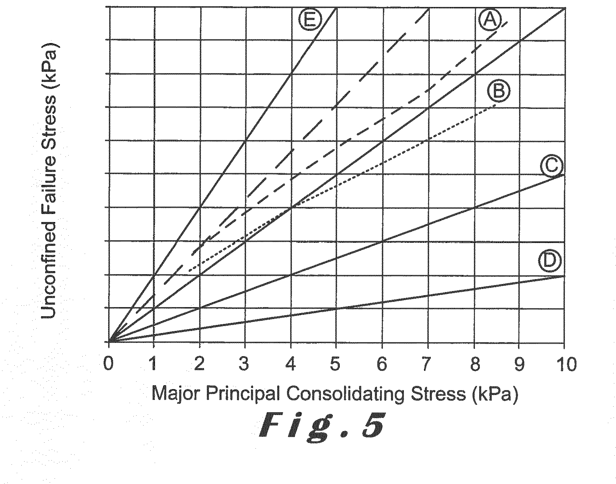

Figure 5 is a Jenicke flow diagram for powdery material showing the cohesive behavior of the powdery material when it is hydrated lime.

As it has been said previously, the problem of adhesion to solid objects is increasingly important for particles of decreasing particle diameter because of the increased contribution of electrostatic forces in comparison with friction, impulse and gravitation forces.

Hydrated lime particles with diameter (< 100 $\mu$m) are generally classified as cohesive according to the Geldart classification and their flow properties can be evaluated in detail using the flow function classification according to Jenicke.

With the Jenicke flow function the internal cohesion of the powder is measured and this can be regarded as a good indicator for the **adhesion** properties of a powder.

In figure 5, the cohesiveness of two hydrated lime powders are shown. Powder A has a particle size of $d_p$ = 10 ($\mu$m) while Powder B has a particle size of $d_p$ = 3 ($\mu$m). It is clear that Power B is more cohesive and is classified by the flow function by "very cohesive". As a result, Powder B, will be much more sensitive to adhesion to rigid pipe walls than Powder A. Powder C is an easy flowing powder, Powder D is a free flowing powder, while powder E is a sticky powder.

**Example.-**

Tests have been performed on an industrial scale, in a power plant, to evaluate the effects of the present invention for pneumatically conveying of powdery hydrated lime sorbent, notably in terms of the fluctuation of the pressure drop inside the plant.

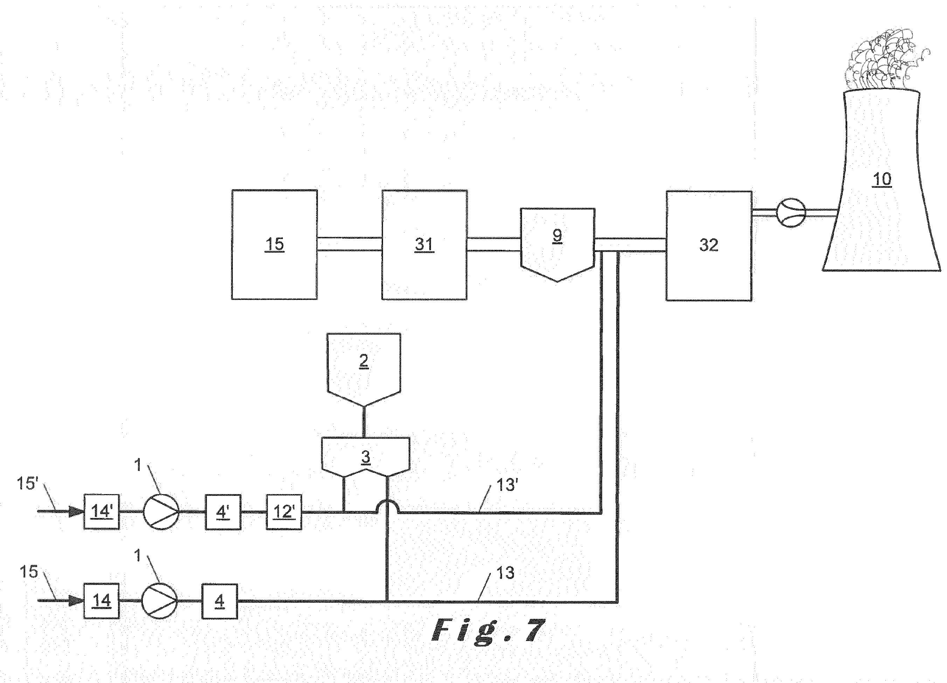

The power plant used in these tests, which is illustrated in figure 7, comprises a burner (15), a furnace (31) for burning coal, said furnace being connected to a flue gas duct wherein flue gases generated in said furnace are directed to an electrostatic precipitator (9), followed by a scrubber (32) and further evacuated to a chimney (10).

The hydrated lime is injected into the flue gas duct of this power plant, before the electrostatic precipitator and before the chimney, for capturing gaseous pollutants, in particular $SO_2$. Such sorbent is a high specific surface area hydrated lime, as disclosed in WO9714650.

The plant further comprises a storage tank (2) for said powdery hydrated lime, said tank being connected to the furnace through a hopper (3) having two outputs for directing said powdery hydrated lime in parallel into two pneumatic conveying pipelines (13, 13') at an identical feedrate. The conveying pipelines (13, 13') both present a diameter of 4 inche (10.2 cm). The feedrate of hydrated lime is periodically adjusted, based on the quantity of coal burned in the furnace and on the amount of sulfur contained therein.

Both conveying pipelines are supplied by blowers (1, 1') with air (15, 15') as conveying fluid.

Those conveying fluids (15, 15') are first dried by drying devices (14, 14') before entering the blowers (1, 1') and then further cooled by cooling devices (4, 4') after being blown by the blowers. The blowers (1,1') present an initial pressure drop fixed at about 10 kPa.

In order to illustrate the present invention, the conveying fluid (15') is further transferred into a sonic device (12'), as previously described, before being in contact with hydrated lime.

The pressures drops in both conveying pipelines (13, 13') are continuously measured by the blowers (1, 1').

Consequently, with this plant, it is possible to compare in real time the fluctuation of pressure drop, notably generated by the variation overtime of the feedrate of hydrated lime injection, in a conveying pipeline where no sonic device has been implemented, compared to a conveying pipeline according to the present invention comprising a sonic device, as previously described.

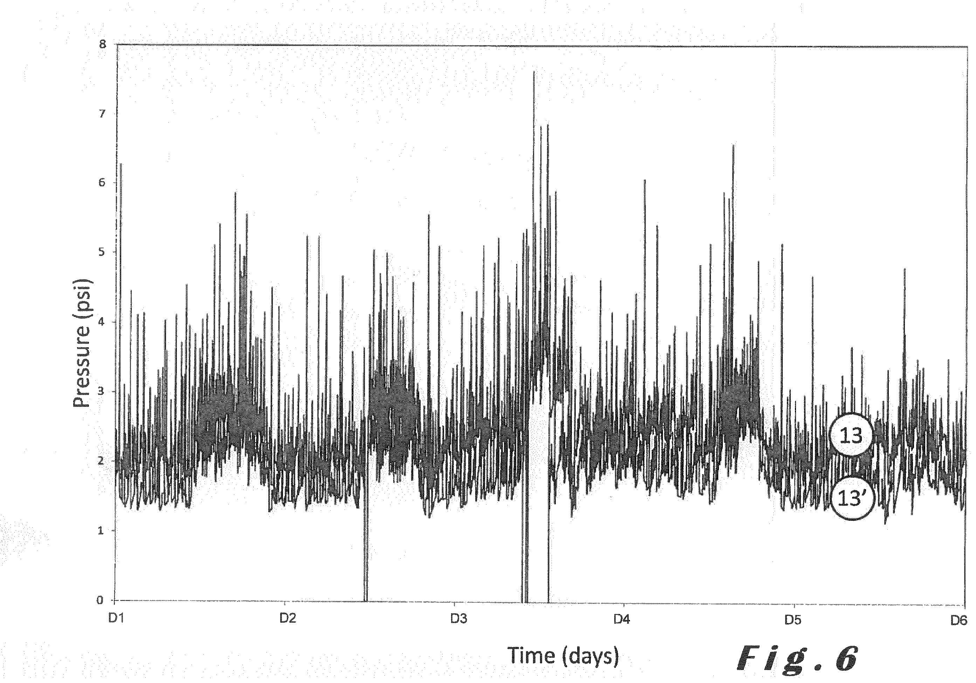

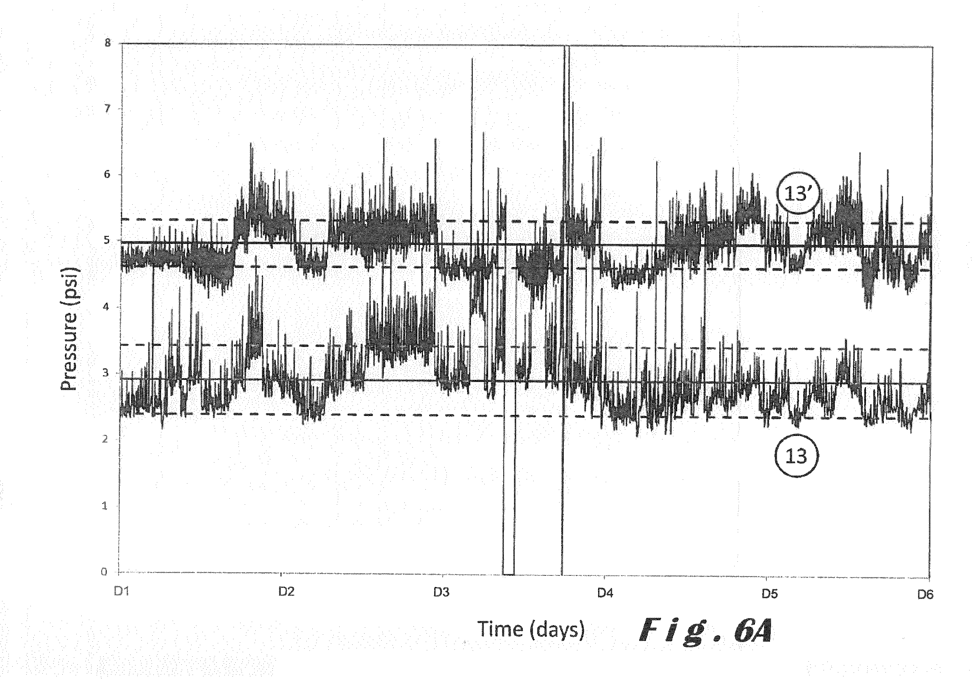

The results are illustrated in Figure 6 and 6A.

Figure 6 shows the pressure in the lines measured as a function of time for a period of five consecutive days of operation. Figure 6 represents the reference case i.e. the sonic device is not in operation and the conditions for lines 13' and 13 are similar. It is clear from Figure 6 that large fluctuations occur in the pressure readings and that these pressure fluctuations are similar for both line 13' and 13. Table 1 shows a statistical analysis of the pressure readings of Figure 6.

**Table 1.-** Statistical analysis of the pressure signals of lines 13' and 13 with the sonic device not in operation.

|  | Line 13' Without Sonic | Line 13 Without Sonic |  |
| --- | --- | --- | --- |
| Average Pressure | 1.82 | 2.43 | (PSI) |
| Pressure fluctuations | 0.54 | 0.53 | (PSI) |
| Relative pressure fluctuation | 29.6 | 21.7 | (%) |

We can conclude from Table 1 that both lines 13' and 13 are operating at similar average pressure with line 13' operating at a lower average pressure. The pressure fluctuation of the two lines is represented in Table 1 as the standard deviation ($1\sigma$) of the pressure signal. It is clear that the pressure fluctuation is virtually identical for the two lines. This means that, with the sonic device not in operation, the pressure loss and the variation in pressure is similar. Finally we represent the relative pressure fluctuation in Table 1 which is the ratio of standard deviation and average pressure. Since the average pressure in line 13' is a little lower, the relative effect of the pressure fluctuations is a little higher. The relative pressure fluctuation is 22 - 30% in the two lines. Such variation of pressure is very significant and will generate variations in the gas flow rate of the pneumatic conveying system. Note that the reported pressure fluctuation is an average number for the whole five days of operation, the instantaneous pressure fluctuations are significantly larger.

Figure 6A shows the pressure signal of lines 13' and 13 in the case the sonic device is in operation in line 13' over a period of five days. It is evident that the pressure in line 13' is significantly higher than in line 13. Apparently operating line 13' with the sonic device generates a higher pressure loss. Note that in the case of operation without sonic device line 13' showed a slightly lower pressure than line 13, see Figure 6. A statistical analysis of the pressure signal of Figure 6A is given in Table 2.

**Table 2.-** Statistical analysis of the pressure signals of lines 13' and 13 with the sonic device in operation.

|  | Line 13' With Sonic | Line 13 Without Sonic |  |
| --- | --- | --- | --- |
| Average Pressure | 4.96 | 2.91 | (PSI) |
| Pressure fluctuations | 0.35 | 0.51 | (PSI) |
| Relative pressure fluctuation | 7.0 | 17.7 | (PSI/PSI) |

First, Table 2 shows that the average pressure is nearly a factor of two (1.7) higher in the line with the sonic device in operation (13') than in the line without sonic device (13). The pressure fluctuations, represented in Table 2 as the standard deviation ($1\sigma$) of the pressure signal, show that the line with sonic device in operation (13') is much more stable than the line without sonic device (13). The standard deviation of the pressure signal is nearly one and a half (1.45) times higher for the line without sonic device (13) than for the line with sonic device.

For the line with sonic device in operation (13') a consequence of the combination of a higher average pressure and a low standard deviation is that the relative pressure fluctuation (ratio of standard deviation and average pressure) is more than 2.5 times lower. Line (13), without sonic device, shows a relative pressure fluctuation of 18% which is similar to the 22% found in the time frame shown in Figure 6 and Table 1. For the line with sonic device in operation (13') the relative pressure fluctuation is only 7%. This lower pressure fluctuation, both absolute and relative, will result in a significantly improved stability of the pneumatic conveying system.

It is clear from Figures 6,6A and the statistical analysis of Tables 1, 2 that the sonic device results in dampening of the pressure fluctuations and as a consequence improved stability of the pneumatic conveying system.

In addition, the operation at an higher average pressure, in case the sonic device is in operation, will cause pressure perturbations in the flue gas duct to have smaller effect on the pressure in the conveying line and as a consequence a smaller impact on the pneumatic air speed. This results in a more stable pneumatic conveying operation.

**Claims**

**1.** Process for pneumatically conveying a powdery material, in particular a powdery sorbent, comprising the steps of

- Pneumatically conveying a powdery material, in particular a powdery sorbent, in a first pneumatic conveying pipeline from a powdery material, in particular a powdery sorbent, storage tank to a recipient zone, said first pneumatic conveying pipeline comprising a pipeline wall and being connected to said powdery material, in particular said powdery sorbent, storage tank and to said recipient zone,
- A powdery material, in particular a powdery sorbent, dosing step by means of a dosing means for dosing an amount of said powdery material, in particular said powdery sorbent, when entering from said powdery material, in particular said powdery sorbent, storage tank into said first pneumatic conveying pipeline, said first pneumatic conveying pipeline being connected to said powdery material, in particular said powdery sorbent, storage tank through said dosing means,
- A fluctuation step of pressure drop in said first pneumatic conveying pipeline and/or up to said recipient zone,
- Generating infrasonic waves by an infrasound device inside said first pneumatic conveying pipeline and/or up to said recipient zone, providing a counteraction on the fluctuation step of the pressure drop in said first pneumatic conveying pipeline and/or up to said recipient zone,

wherein when said infrasound device provides a counteraction on the fluctuation step of the pressure drop in said first pneumatic conveying pipeline and/or up to said recipient zone, said infrasound device provides a smoothing action and/or a masking action on the fluctuation step of the pressure drop in said first pneumatic conveying pipeline and/or or up to said recipient zone,

wherein said infrasonic waves are generated inside an infrasound device comprising a first chamber and a second chamber, both first and second chamber being connected to each other by a tube,

**characterized in that**

said powdery material, in particular said powdery sorbent, is pneumatically transported inside said first pneumatic conveying pipeline and into said recipient zone by a flow generated by a blower connected to said first pneumatic conveying pipeline and blowing conveying fluid inside said first pneumatic conveying pipeline in which particles of said powdery material, in particular said powdery sorbent, are transported,

wherein the blower connected to said first pneumatic conveying pipeline and blowing conveying fluid inside said first pneumatic conveying pipeline also blows said conveying fluid at least partially through said infrasound device,

wherein said infrasonic waves being generated by an exciter inside the first chamber providing infrasound pulses to said conveying fluid blown at least partially inside said first chamber, said generated infrasonic waves being transported through the tube to reach the second chamber,

wherein a first portion of said conveying fluid blown by said blower is transported through said tube from said first chamber to said second chamber while a second portion of said conveying fluid blown by said blower is derived and introduced inside said second chamber.

2. Process for pneumatically conveying a powdery material, in particular a powdery sorbent, according to claim 1, wherein the powdery material, in particular the powdery sorbent, is selected from the group consisting of hydrated lime, hydrated or semi-hydrated dolime, limestone, dolomite, quick lime, quick dolime, sodium carbonate or bicarbonate, sodium sesquicarbonate dihydrate, halloysite, sepiolite, a carbonaceous organic compound selected from active carbon and lignite coke, fly ash or a mixture of any of these compounds.

3. Process for pneumatically conveying a powdery material, in particular a powdery sorbent, according to claim 1 or claim 2, wherein said conveying fluid is air, inert gas, exhaust gases, or mixture thereof.

4. Process for pneumatically conveying a powdery material, in particular a powdery sorbent, according to anyone of the claims 1 to 3, wherein infrasound waves transported inside said first pneumatic conveying pipeline during said transport of powdery material, in particular of powdery sorbent, also contact said dosing means.

5. Process for pneumatically conveying a powdery material, in particular a powdery sorbent, according to anyone of the claims 1 to 4, wherein infrasound waves travel inside said first pneumatic conveying pipeline during said transport of powdery material, in particular of powdery sorbent and preferably also travel up to the recipient zone.

6. Process for pneumatically conveying a powdery material, in particular a powdery sorbent, according to anyone of the claims 1 to 5, wherein infrasonic waves transported inside said first pneumatic conveying pipeline during said transport of powdery material, in particular powdery sorbent, are prevented to reach the blower due to an Helmholtz bass trap connected to said first chamber or preferably on the pipeline between the blower and the first chamber.

7. Process for pneumatically conveying a powdery material, in particular a powdery sorbent according to anyone of the claims 1 to 6, comprising an emergency mode and an operating mode, wherein in emergency mode, the blown conveying fluid is prevented from entering said first chamber and is diverted and blown directly to said first pneumatic conveying pipeline, downstream the infrasound device and wherein in operating mode, the blown conveying fluid is provided at least partially to said first chamber.

8. Process for improving capture of polluting compounds from flue gases comprising the steps of:

- Burning fuel and/or a material to be burned or heating a material to be heated or melted, producing flue gases in a recipient zone,
- Pneumatically conveying a powdery sorbent provided for capturing said polluting compounds according to the process of any one of the claims 1 to 7, said recipient zone being a flue gas duct,
- Capturing polluting compounds by said powdery sorbent inside said flue gas duct thereby depleting the flue gas from polluting compounds.

9. Process for improving capture of polluting compounds from flue gases according to claim 8, wherein a fluctuation step of operating conditions of said burning step of fuel and/or said material to be burned or to be heated or to be melted generates a first signal and/or the fluctuation step of the pressure drop inside said first conveying pipeline, said process further comprising an adjusting step of said amount of powdery sorbent in response to said first signal and/or to said fluctuation step of the pressure drop inside said first conveying pipeline.

10. Process for improving capture of polluting compounds from flue gases according to claim 9, wherein said first signal is such as wind speed of environment at the outlet of the chimney, atmospheric pressure of environment at the outlet of the chimney or outside said flue gas duct, temperature of the flue gas, nature of the fuel, sulfur content of the fuel, sulfur content of the flue gas, chloride content of the flue gas, mercury content of the flue gas, chloride content of material to be burned or heated or melted, sulfur content of material to be burned or heated or melted, mercury content of material to be burned or heated or melted, and their combination.

11. Device for improving capture of polluting compounds from flue gases in accordance with the processes according to claim 8 comprising

- a furnace or combustion chamber provided for burning fuel and/or a material to be burned or heated or melted and producing flue gases, said furnace or combustion chamber being connected to a flue gas duct where flue gases generated in said furnace or combustion chamber are directed,
- a powdery sorbent storage tank connected to said flue gas duct by means of a first pneumatic conveying pipeline,
- a powdery sorbent dosing means provided for dosing an amount of said powdery sorbent when entering from said powdery sorbent storage tank into said first pneumatic conveying pipeline, said first pneumatic conveying pipeline being connected to said powdery sorbent storage tank through said dosing means,
- a controlling device for adjusting said amount of powdery sorbent in response to a first signal,
- a infrasound device connected to said first pneumatic conveying pipeline and provided to generate infrasonic waves inside said first pneumatic conveying pipeline and/or up to said flue gas duct, said infrasound device being further provided to counteract on a fluctuation step of the pressure drop in said first pneumatic conveying pipeline and/or up to said flue gas duct, wherein said infrasound device comprises a first chamber and a second chamber connected to each other by a tube,

**characterized in that**

said first pneumatic conveying pipeline being further connected to a blower provided for pneumatically conveying said powdery sorbent from said powdery sorbent storage tank in said first pneumatic conveying pipeline to said flue gas duct, said first pneumatic conveying pipeline comprising a pipeline wall and being connected to said flue gas duct, said blower being provided to generate a flow of conveying fluid inside said first pneumatic conveying pipeline in which particles of said powdery sorbent are transported,

wherein said first chamber comprising an exciter located inside said first chamber, provided to generate said infrasonic waves by providing infrasound pulses to said conveying fluid blown at least partially inside said first chamber, said generated infrasonic waves being transported through the tube acting as a resonance pipeline to reach the second chamber,

wherein the device further comprises an adjustable flowrate distributor pipe connected at a first end either to the blower, between the blower and the first chamber or to the first chamber, and at a second end to the second chamber, said adjustable flowrate distributor pipe being provided for deriving a portion of said conveying fluid blown by the blower and introducing it inside the second chamber.

12. Device for improving capture of polluting compounds from flue gases according to claim 11, further comprising a mixing or connecting device located between said dosing means and said first pneumatic conveying pipeline, provided to mix said powdery sorbent in said conveying fluid.

13. Device for improving capture of polluting compounds from flue gases according to claim 11 or claim 12, wherein said infrasound device is connected to said blower and to the first pneumatic conveying pipeline.

14. Device for improving capture of polluting compounds from flue gases according to any one of the claims 11 to 13, wherein the powdery sorbent storage tank is a powdery sorbent storage tank of powdery sorbent selected from the group consisting of hydrated lime, hydrated or semi-hydrated dolime, limestone, dolomite, quick lime, quick dolime, sodium carbonate or bicarbonate, sodium sesquicarbonate dihydrate, halloysite, sepiolite, a carbonaceous organic compound selected from active carbon and lignite coke, fly ash or a mixture of any of these compounds.

15. Device for improving capture of polluting compounds from flue gases according to claim 13 or claim 14, further comprising an Helmholtz bass trap connected to said first chamber or preferably on the pipeline between the blower and the first chamber, provided to prevent infrasonic waves transported inside said first pneumatic conveying pipeline during said transport of powdery sorbent to reach the blower.

16. Device for improving capture of polluting compounds from flue gases according to anyone of the claims 13 to 15, comprising an emergency device having a first position being an emergency position and a second position being an operating position, said emergency device comprising a switch connected to an emergency pipe connecting directly the blower to the first pneumatic conveying pipeline, downstream the infrasound device, said emergency position being a position wherein the switch prevents the blown conveying fluid from entering said first chamber and diverting it directly to said first pneumatic conveying pipeline, downstream the infrasound device and wherein the operating position is a position wherein the blown conveying fluid is provided at least partially to said first chamber.

**17.** Device for improving capture of polluting compounds from flue gases according to anyone of the claims 11 to 16, wherein said dosing means is selected from a dosing screw, a rotating valve with a vertical shaft or an horizontal shaft, an air slide, a jet feeder, a screw-feeder, an airlock-feeder, a screw pump, a pressure vessel, an air lift, said dosing means being located between said powdery sorbent storage tank and said first pneumatic conveying pipeline being provided to be contacted by sonic waves transported inside said first pneumatic conveying pipeline during said transport of powdery sorbent.

**Patentansprüche**

**1.** Verfahren zum pneumatischen Fördern eines pulverförmigen Materials, insbesondere eines pulverförmigen Sorptionsmittels, umfassend die folgenden Schritte

- Pneumatisches Fördern eines pulverförmigen Materials, insbesondere eines pulverförmigen Sorptionsmittels, in einer ersten pneumatischen Förderrohrleitung von einem Vorratsbehälter für pulverförmiges Material, insbesondere ein pulverförmiges Sorptionsmittel, zu einem Empfangsbereich, wobei die erste pneumatische Förderrohrleitung eine Rohrleitungswand umfasst und mit dem Vorratsbehälter für pulverförmiges Material, insbesondere das pulverförmige Sorptionsmittel, und mit dem Empfangsbereich verbunden ist,
- einen Dosierschritt für ein pulverförmiges Material, insbesondere ein pulverförmiges Sorptionsmittel, mittels einer Dosiereinrichtung zum Dosieren einer Menge des pulverförmigen Materials, insbesondere des pulverförmigen Sorptionsmittels, beim Eintritt aus dem Vorratsbehälter für das pulverförmige Material, insbesondere das pulverförmige Sorptionsmittel, in die erste pneumatische Förderleitung, wobei die erste pneumatische Förderleitung mit dem Vorratsbehälter für das pulverförmige Material, insbesondere das pulverförmige Sorptionsmittel, durch die Dosiereinrichtung verbunden ist,
- einen Schwankungsschritt des Druckabfalls in der ersten pneumatischen Förderleitung und/oder bis zum Empfangsbereich,
- Erzeugen von Infraschallwellen durch eine Infraschallvorrichtung innerhalb der ersten pneumatischen Förderleitung und/oder bis zu dem Empfangsbereich, wodurch eine Gegenwirkung auf den Schwankungsschritt des Druckabfalls in der ersten pneumatischen Förderleitung und/oder bis zu dem Empfangsbereich bereitgestellt wird,

wobei, wenn die Infraschallvorrichtung eine Gegenwirkung auf den Schwankungsschritt des Druckabfalls in der ersten pneumatischen Förderleitung und/oder bis zu dem Empfangsbereich bereitstellt, die Infraschallvorrichtung eine Glättungswirkung und/oder eine Maskierungswirkung auf den Schwankungsschritt des Druckabfalls in der ersten pneumatischen Förderleitung und/oder bis zu dem Empfangsbereich bereitstellt, wobei die Infraschallwellen innerhalb einer Infraschallvorrichtung erzeugt werden, die eine erste Kammer und eine zweite Kammer umfasst, wobei sowohl die erste als auch die zweite Kammer durch ein Rohr miteinander verbunden sind,

**dadurch gekennzeichnet, dass**

das pulverförmige Material, insbesondere das pulverförmige Sorptionsmittel, pneumatisch in der ersten pneumatischen Förderleitung und in den Empfangsbereich durch einen Strom transportiert wird, der durch ein Gebläse erzeugt wird, das mit der ersten pneumatischen Förderleitung verbunden ist und Förderfluid in die erste pneumatische Förderleitung bläst, in der Partikel des pulverförmigen Materials, insbesondere des pulverförmigen Sorptionsmittels, transportiert werden,
wobei das Gebläse, das mit der ersten pneumatischen Förderleitung verbunden ist und das Förderfluid in die erste pneumatische Förderleitung bläst, das Förderfluid auch zumindest teilweise durch die Infraschallvorrichtung bläst,
wobei die Infraschallwellen durch einen Erreger innerhalb der ersten Kammer erzeugt werden, der Infraschallimpulse an das Förderfluid bereitstellt, das zumindest teilweise in die erste Kammer geblasen wird, wobei die erzeugten Infraschallwellen durch das Rohr transportiert werden, um die zweite Kammer zu erreichen,
wobei ein erster Abschnitt des von dem Gebläse geblasenen Förderfluids durch das Rohr von der ersten Kammer zu der zweiten Kammer transportiert wird, während ein zweiter Abschnitt des von dem Gebläse geblasenen Förderfluids abgeleitet und in die zweite Kammer eingeleitet wird.

**2.** Verfahren zum pneumatischen Fördern eines pulverförmigen Materials, insbesondere eines pulverförmigen Sorptionsmittels, nach Anspruch 1, wobei das pulverförmige Material, insbesondere das pulverförmige Sorptionsmittel, ausgewählt ist aus der Gruppe bestehend aus Kalkhydrat, hydratisiertem oder halbhydratisiertem Dolomit, Kalkstein, Dolomit, Branntkalk, Branntdolomit, Natriumcarbonat oder - bicarbonat, Natriumsesquicarbonat-Dihydrat, Halloysit, Sepiolith, einer kohlenstoffhaltigen organischen Verbindung, ausgewählt aus Aktivkohle und Braunkohlenkoks, Flugasche oder einem Gemisch aus einer beliebigen dieser Verbindungen.

3.  Verfahren zum pneumatischen Fördern eines pulverförmigen Materials, insbesondere eines pulverförmigen Sorptionsmittels, nach Anspruch 1 oder Anspruch 2, wobei es sich bei dem Förderfluid um Luft, Inertgas, Abgase oder eine Mischung davon handelt.

4.  Verfahren zum pneumatischen Fördern eines pulverförmigen Materials, insbesondere eines pulverförmigen Sorptionsmittels, nach irgendeinem der Ansprüche 1 bis 3, wobei Infraschallwellen, die während des Transports des pulverförmigen Materials, insbesondere des pulverförmigen Sorptionsmittels, in der ersten pneumatischen Förderleitung transportiert werden, auch mit der Dosiereinrichtung in Kontakt kommen.

5.  Verfahren zum pneumatischen Fördern eines pulverförmigen Materials, insbesondere eines pulverförmigen Sorptionsmittels, nach irgendeinem der Ansprüche 1 bis 4, wobei sich Infraschallwellen während des Transports des pulverförmigen Materials, insbesondere des pulverförmigen Sorptionsmittels, innerhalb der ersten pneumatischen Förderleitung ausbreiten und vorzugsweise auch bis zum Empfangsbereich gelangen.

6.  Verfahren zum pneumatischen Fördern eines pulverförmigen Materials, insbesondere eines pulverförmigen Sorptionsmittels, nach irgendeinem der Ansprüche 1 bis 5, wobei Infraschallwellen, die während des Transports des pulverförmigen Materials, insbesondere des pulverförmigen Sorptionsmittels, in der ersten pneumatischen Förderleitung transportiert werden, durch eine Helmholtz-Bassfalle, die mit der ersten Kammer verbunden ist, oder vorzugsweise an der Rohrleitung zwischen dem Gebläse und der ersten Kammer, daran gehindert werden, das Gebläse zu erreichen.

7.  Verfahren zum pneumatischen Fördern eines pulverförmigen Materials, insbesondere eines pulverförmigen Sorptionsmittels nach irgendeinem der Ansprüche 1 bis 6, umfassend einen Notfallmodus und einen Betriebsmodus, wobei im Notfallmodus das eingeblasene Förderfluid daran gehindert wird, in die erste Kammer einzutreten, und direkt in die erste pneumatische Förderleitung, stromabwärts der Infraschallvorrichtung, umgeleitet und eingeblasen wird, und wobei im Betriebsmodus das geblasene Förderfluid zumindest teilweise der ersten Kammer bereitgestellt ist.

8.  Verfahren zur Verbesserung der Abscheidung von Schadstoffen aus Rauchgasen, umfassend die folgenden Schritte:

    - Verbrennen von Brennstoff und/oder eines zu verbrennenden Materials oder Erhitzen eines zu erhitzenden oder zu schmelzenden Materials, wobei Rauchgase in einem Empfangsbereich gebildet werden,
    - Pneumatisches Fördern eines pulverförmigen Sorptionsmittels, das zum Erfassen der Schadstoffe gemäß dem Verfahren nach irgendeinem der Ansprüche 1 bis 7 bereitgestellt ist, wobei der Empfangsbereich ein Rauchgaskanal ist,
    - Einfangen von Schadstoffen durch das pulverförmige Sorptionsmittel innerhalb des Rauchgaskanals, wodurch das Rauchgas von Schadstoffen befreit wird.

9.  Verfahren zur Verbesserung der Abscheidung von Schadstoffen aus Rauchgasen nach Anspruch 8, wobei ein Schritt der Schwankung der Betriebsbedingungen des Verbrennungsschritts des Brennstoffs und/oder des zu verbrennenden oder zu erhitzenden oder zu schmelzenden Materials ein erstes Signal und/oder den Schritt der Schwankung des Druckabfalls innerhalb der ersten Förderleitung erzeugt, wobei das Verfahren ferner einen Schritt der Einstellung der Menge des pulverförmigen Sorptionsmittels als Reaktion auf das erste Signal und/oder auf den Schritt der Schwankung des Druckabfalls innerhalb der ersten Förderleitung umfasst.

10. Verfahren zur Verbesserung der Abscheidung von Schadstoffen aus Rauchgasen nach Anspruch 9, wobei das erste Signal beispielsweise die Windgeschwindigkeit der Umgebung am Ausgang des Schornsteins, der atmosphärische Druck der Umgebung am Ausgang des Schornsteins oder außerhalb des Rauchgaskanals, die Temperatur des Rauchgases, die Art des Brennstoffs, der Schwefelgehalt des Brennstoffs, der Schwefelgehalt des Rauchgases, der Chloridgehalt des Rauchgases, der Quecksilbergehalt des Rauchgases, der Chloridgehalt des zu verbrennenden oder zu erhitzenden oder zu schmelzenden Materials, der Schwefelgehalt des zu verbrennenden oder zu erhitzenden oder zu schmelzenden Materials, der Quecksilbergehalt des zu verbrennenden oder zu erhitzenden oder zu schmelzenden Materials und deren Kombination ist.

11. Vorrichtung zur Verbesserung der Abscheidung von Schadstoffen aus Rauchgasen gemäß den Verfahren nach Anspruch 8, umfassend

- einen Ofen oder eine Brennkammer, der/die zur Verbrennung von Brennstoff und/oder eines zu verbrennenden oder zu erhitzenden oder zu schmelzenden Materials bereitgestellt ist und Rauchgase bildet, wobei der Ofen oder die Brennkammer mit einem Rauchgaskanal verbunden ist, durch den die in dem Ofen oder der Brennkammer erzeugten Rauchgase geleitet werden,
- einen Vorratsbehälter für pulverförmiges Sorptionsmittel, der mittels einer ersten pneumatischen Förderleitung mit dem Rauchgaskanal verbunden ist,
- eine Dosiereinrichtung für pulverförmiges Sorptionsmittel, die zum Dosieren einer Menge des pulverförmigen Sorptionsmittels bereitgestellt ist, wenn es aus dem Vorratsbehälter für pulverförmiges Sorptionsmittel in die erste pneumatische Förderleitung eintritt, wobei die erste pneumatische Förderleitung durch die Dosiereinrichtung mit dem Vorratsbehälter für pulverförmiges Sorptionsmittel verbunden ist,
- eine Steuervorrichtung zum Einstellen der Menge des pulverförmigen Sorptionsmittels als Reaktion auf ein erstes Signal,
- eine Infraschallvorrichtung, die mit der ersten pneumatischen Förderleitung verbunden ist und bereitgestellt ist, um Infraschallwellen innerhalb der ersten pneumatischen Förderleitung und/oder bis zu dem Rauchgaskanal zu erzeugen, wobei die Infraschallvorrichtung ferner bereitgestellt ist, um einem Schwankungsschritt des Druckabfalls in der ersten pneumatischen Förderleitung und/oder bis zu dem Rauchgaskanal entgegenzuwirken, wobei die Infraschallvorrichtung eine erste Kammer und eine zweite Kammer umfasst, die durch ein Rohr miteinander verbunden sind,

**dadurch gekennzeichnet, dass**

die erste pneumatische Förderleitung ferner mit einem Gebläse verbunden ist, das zum pneumatischen Fördern des pulverförmigen Sorptionsmittels von dem Vorratsbehälter für das pulverförmige Sorptionsmittel in der ersten pneumatischen Förderleitung zu dem Rauchgaskanal bereitgestellt ist, wobei die erste pneumatische Förderleitung eine Rohrleitungswand umfasst und mit dem Rauchgaskanal verbunden ist, wobei das Gebläse bereitgestellt ist, um einen Strom von Förderfluid innerhalb der ersten pneumatischen Förderleitung zu erzeugen, in dem Partikel des pulverförmigen Sorptionsmittels transportiert werden, wobei die erste Kammer einen Erreger umfasst, der sich innerhalb der ersten Kammer befindet und bereitgestellt ist, um die Infraschallwellen durch Bereitstellen von Infraschallimpulsen für das Förderfluid zu erzeugen, das zumindest teilweise in die erste Kammer geblasen wird, wobei die erzeugten Infraschallwellen durch das Rohr transportiert werden, das als eine Resonanzleitung wirkt, um die zweite Kammer zu erreichen, wobei die Vorrichtung ferner ein Verteilerrohr mit einstellbarem Durchfluss umfasst, das an einem ersten Ende entweder mit dem Gebläse, zwischen dem Gebläse und der ersten Kammer oder mit der ersten Kammer, und an einem zweiten Ende mit der zweiten Kammer verbunden ist, wobei das Verteilerrohr mit einstellbarem Durchfluss bereitgestellt ist, um einen Abschnitt des vom Gebläse geblasenen Förderfluids abzuleiten und in die zweite Kammer einzuleiten.

12. Vorrichtung zur Verbesserung der Abscheidung von Schadstoffen aus Rauchgasen nach Anspruch 11, die ferner eine Misch- oder Verbindungsvorrichtung umfasst, die sich zwischen der Dosiereinrichtung und der ersten pneumatischen Förderleitung befindet und bereitgestellt ist, um das pulverförmige Sorptionsmittel mit dem Förderfluid zu mischen.

13. Vorrichtung zur Verbesserung der Abscheidung von Schadstoffen aus Rauchgasen nach Anspruch 11 oder Anspruch 12, wobei die Infraschallvorrichtung mit dem Gebläse und mit der ersten pneumatischen Förderleitung verbunden ist.

14. Vorrichtung zur Verbesserung der Abscheidung von Schadstoffen aus Rauchgasen nach irgendeinem der Ansprüche 11 bis 13, wobei der Vorratsbehälter für pulverförmiges Sorptionsmittel ein Vorratsbehälter für pulverförmiges Sorptionsmittel ist, ausgewählt aus der Gruppe bestehend aus Kalkhydrat, hydratisiertem oder halbhydratisiertem Dolomit, Kalkstein, Dolomit, Branntkalk, Branntdolomit, Natriumcarbonat oder -bicarbonat, Natriumsesquicarbonat-Dihydrat, Halloysit, Sepiolith, einer kohlenstoffhaltigen organischen Verbindung, ausgewählt aus Aktivkohle und Braunkohlenkoks, Flugasche oder einem Gemisch aus einer beliebigen dieser Verbindungen.

15. Vorrichtung zur Verbesserung der Abscheidung von Schadstoffen aus Rauchgasen nach Anspruch 13 oder Anspruch 14, die ferner eine Helmholtz-Bassfalle umfasst, die mit der ersten Kammer oder vorzugsweise mit der Rohrleitung zwischen dem Gebläse und der ersten Kammer verbunden ist, und vorgesehen ist, um zu verhindern, dass während des Transports des pulverförmigen Sorptionsmittels zum Gebläse Infraschallwellen in der ersten pneumatischen Förderrohrleitung transportiert werden.

16. Vorrichtung zur Verbesserung der Abscheidung von Schadstoffen aus Rauchgasen nach irgendeinem der Ansprüche 13 bis 15, umfassend eine Notfallvorrichtung, die eine erste Position, die eine Notfallposition ist, und eine zweite Position, die eine Betriebsposition ist, aufweist, wobei die Notfallvorrichtung einen Schalter umfasst, der mit einer Notfallleitung verbunden ist, die das Gebläse direkt mit der ersten pneumatischen Förderleitung stromabwärts der Infraschallvorrichtung verbindet, wobei die Notfallposition eine Position ist, in der der Schalter das geblasene Förderfluid daran hindert, in die erste Kammer einzutreten, und es direkt zu der ersten pneumatischen Förderleitung stromabwärts der Infraschallvorrichtung umleitet, und wobei die Betriebsposition eine Position ist, in der das geblasene Förderfluid zumindest teilweise der ersten Kammer bereitgestellt wird.

17. Vorrichtung zur Verbesserung der Abscheidung von Schadstoffen aus Rauchgasen nach einem der Ansprüche 11 bis 16, wobei die Dosiereinrichtung ausgewählt ist aus einer Dosierschnecke, einem rotierenden Ventil mit einer vertikalen Welle oder einer horizontalen Welle, einem Luftschieber, einem Düsenzuführer, einem Schneckenzuführer, einem Luftschleusenzuführer, einer Schneckenpumpe, einem Druckbehälter, einem Luftheber, wobei sich die Dosiereinrichtung zwischen dem Vorratsbehälter für pulverförmiges Sorptionsmittel und der ersten pneumatischen Förderleitung befindet und bereitgestellt ist, um während des Transports von pulverförmigem Sorptionsmittel mit den in der ersten pneumatischen Förderleitung transportierten Schallwellen in Kontakt zu kommen.

## Revendications

1. Procédé de transport pneumatique d'un matériau pulvérulent, en particulier d'un sorbant pulvérulent, comprenant les étapes suivantes

- transport pneumatique d'un matériau pulvérulent, en particulier un sorbant pulvérulent, dans un premier conduit de transport pneumatique depuis un réservoir de stockage d'un matériau pulvérulent, en particulier un sorbant pulvérulent, jusqu'à une zone de réception, ledit conduit de transport pneumatique comprenant une paroi de conduit et étant relié audit réservoir de stockage d'un matériau pulvérulent, en particulier audit sorbant pulvérulent, et à ladite zone de réception,
- Une étape de dosage d'un matériau pulvérulent, en particulier d'un sorbant pulvérulent, avec l'aide d'un moyen de dosage pour doser une quantité dudit matériau pulvérulent, en particulier dudit sorbant pulvérulent, lors de l'entrée dudit réservoir de stockage d'un matériau pulvérulent, en particulier dudit sorbant pulvérulent, dans ledit premier conduit de transport pneumatique, ledit premier conduit de transport pneumatique étant relié audit réservoir de stockage d'un matériau pulvérulent, en particulier ledit sorbant pulvérulent, par le biais dudit moyen de dosage,
- Une étape de fluctuation de la chute de pression dans ledit premier conduit de transport pneumatique et/ou jusqu'à ladite zone de réception,
- Génération d'ondes infrasonores par un dispositif à infrasons à l'intérieur dudit premier conduit de transport pneumatique et/ou jusqu'à ladite zone de réception, fournissant une contre-action sur l'étape de fluctuation de la chute de pression dans ledit premier conduit de transport pneumatique et/ou jusqu'à ladite zone de réception, dans lequel, lorsque ledit dispositif à infrasons fournit une contre-action sur l'étape de fluctuation de la chute de pression dans ledit premier conduit de transport pneumatique et/ou jusqu'à ladite zone de réception, ledit dispositif à infrasons fournit une action de lissage et/ou une action de masquage sur l'étape de fluctuation de la chute de pression dans ledit premier conduit de transport pneumatique et/ou ou jusqu'à ladite zone de réception, dans lequel lesdites ondes infrasonores sont générées à l'intérieur d'un dispositif à infrasons comprenant une première chambre et une deuxième chambre, la première et la deuxième chambre étant reliées l'une à l'autre par un tube,
**caractérisé en ce que**
ledit matériau pulvérulent, en particulier ledit sorbant pulvérulent, est transporté pneumatiquement à l'intérieur dudit premier conduit de transport pneumatique et dans ladite zone de réception par un écoulement généré par une soufflerie connectée audit premier conduit de transport pneumatique et soufflant un fluide de transport à l'intérieur dudit premier conduit de transport pneumatique dans lequel les particules dudit matériau pulvérulent, en particulier ledit sorbant pulvérulent, sont transportées,
dans lequel la soufflerie connectée au premier conduit de transport pneumatique et soufflant le fluide de transport à l'intérieur du premier conduit de transport pneumatique souffle également ledit fluide de transport au moins partiellement à travers le dispositif à infrasons,
dans lequel lesdites ondes infrasonores sont générées par un excitateur à l'intérieur de la première chambre et fournissant des impulsions infrasonores au fluide de transport soufflé au moins partiellement à l'intérieur de la première chambre, lesdites ondes infrasonores générées sont transportées à travers le tube pour atteindre la deuxième chambre,

dans lequel une première partie dudit fluide de transport soufflé par ladite soufflerie est transportée à travers ledit tube de ladite première chambre à ladite deuxième chambre tandis qu'une deuxième partie dudit fluide de transport soufflé par ladite soufflerie est dérivée et introduite à l'intérieur de ladite deuxième chambre.

2. Procédé de transport pneumatique d'un matériau pulvérulent, en particulier d'un sorbant pulvérulent, selon la revendication 1, dans lequel le matériau pulvérulent, en particulier le sorbant pulvérulent, est choisi dans le groupe constitué de la chaux hydratée, la dolomie hydratée ou semi-hydratée, le calcaire, la dolomie, la chaux vive, la dolomie vive, la carbonate ou bicarbonate de sodium, le sesquicarbonate de sodium dihydraté, la halloysite, la sépiolite, un composé organique carboné choisi parmi le charbon actif et le coke de lignite, les cendres volantes ou un mélange de ceux-ci.

3. Procédé de transport pneumatique d'un matériau pulvérulent, en particulier d'un sorbant pulvérulent, selon la revendication 1 ou la revendication 2, dans lequel ledit fluide de transport est de l'air, un gaz inerte, des gaz d'échappement ou un mélange de ceux-ci.

4. Procédé de transport pneumatique d'un matériau pulvérulent, en particulier d'un sorbant pulvérulent, selon l'une quelconque des revendications 1 à 3, dans lequel les ondes infrasonores transportées à l'intérieur dudit premier conduit de transport pneumatique pendant ledit transport du matériau pulvérulent, en particulier du sorbant pulvérulent, entrent également en contact avec ledit moyen de dosage.

5. Procédé de transport pneumatique d'un matériau pulvérulent, en particulier d'un sorbant pulvérulent, selon l'une quelconque des revendications 1 à 4, dans lequel les ondes infrasonores se propagent à l'intérieur du premier conduit de transport pneumatique pendant ledit transport du matériau pulvérulent, en particulier du sorbant pulvérulent, et se propagent de préférence jusqu'à la zone de réception.

6. Procédé de transport pneumatique d'un matériau pulvérulent, en particulier d'un sorbant pulvérulent, selon l'une quelconque des revendications 1 à 5, dans lequel les ondes infrasonores transportées à l'intérieur du premier conduit de transport pneumatique pendant le transport du matériau pulvérulent, en particulier du sorbant pulvérulent, sont empêchées d'atteindre la soufflerie grâce à un absorbeur de basses (bass trap) Helmholtz relié à la première chambre ou, de préférence, au conduit entre la soufflerie et la première chambre.

7. Procédé de transport pneumatique d'un matériau pulvérulent, en particulier d'un sorbant pulvérulent selon l'une quelconque des revendications 1 à 6, comprenant un mode d'urgence et un mode de fonctionnement, dans lequel, en mode d'urgence, le fluide de transport soufflé est empêché de pénétrer dans ladite première chambre et est dévié et soufflé directement dans ledit premier conduit de transport pneumatique, en aval du dispositif à infrasons, et dans lequel, en mode de fonctionnement, le fluide de transport soufflé est fourni au moins en partie vers ladite première chambre.

8. Procédé d'amélioration de la capture des composés polluants de gaz de combustion comprenant les étapes suivantes :

   - Brûler du combustible et/ou un matériau à brûler ou chauffer un matériau à chauffer ou à fondre, en produisant des gaz de combustion dans une zone de réception,
   - Transporter pneumatiquement un sorbant pulvérulent prévu pour la capture desdits composés polluants selon le procédé de l'une quelconque des revendications 1 à 7, ladite zone de réception étant un conduit de gaz de combustion,
   - Capturer des composés polluants par ledit sorbant pulvérulent à l'intérieur dudit conduit de gaz de combustion, permettant d'éliminer les composés polluants des gaz de combustion.

9. Procédé d'amélioration de la capture des composés polluants des gaz de combustion selon la revendication 8, dans lequel une étape de fluctuation des conditions de fonctionnement de ladite étape de combustion du combustible et/ou dudit matériau à brûler ou à chauffer ou à fondre génère un premier signal et/ou l'étape de fluctuation de la chute de pression à l'intérieur dudit premier conduit de transport, ledit procédé comprenant en outre une étape d'ajustement de ladite quantité de sorbant pulvérulent en réponse audit premier signal et/ou à ladite étape de fluctuation de la chute de pression à l'intérieur dudit premier conduit de transport.

10. Procédé d'amélioration de la capture des composés polluants des gaz de combustion selon la revendication 9, dans lequel ledit premier signal est tel que la vitesse du vent de l'environnement à la sortie de la cheminée, la pression atmosphérique de l'environnement à la sortie de la cheminée ou à l'extérieur dudit conduit de gaz de combustion, la température des gaz de combustion, la nature du combustible, la teneur en soufre du combustible, la teneur en soufre des gaz de combustion, la teneur en chlorure des gaz de combustion, la teneur en mercure des gaz de combustion, la teneur en chlorure des matériaux à brûler, à chauffer ou à fondre, la teneur en soufre des matériaux à brûler, à chauffer ou à fondre, la teneur en mercure des matériaux à brûler, à chauffer ou à fondre, et leur combinaison.

11. Dispositif pour améliorer la capture des composés polluants des gaz de combustion selon les procédés de la revendication 8 comprenant

- un four ou une chambre de combustion destiné à brûler du combustible et/ou un matériau à brûler, à chauffer ou à fondre et à produire des gaz de combustion, ledit four ou ladite chambre de combustion étant relié à un conduit de gaz de combustion vers lequel sont dirigés les gaz de combustion générés dans ledit four ou ladite chambre de combustion,
- un réservoir de stockage de sorbant pulvérulent relié audit conduit de gaz de combustion au moyen d'un premier conduit de transport pneumatique,
- un moyen de dosage de sorbant pulvérulent prévu pour doser une quantité dudit sorbant pulvérulent lorsqu'il entre dudit réservoir de stockage de sorbant pulvérulent dans ledit premier conduit de transport pneumatique, ledit premier conduit de transport pneumatique étant relié audit réservoir de stockage de sorbant pulvérulent par l'intermédiaire dudit moyen de dosage,
- un dispositif de commande pour ajuster ladite quantité de sorbant pulvérulent en réponse à un premier signal,
- un dispositif à infrasons connecté audit premier conduit de transport pneumatique et destiné à générer des ondes infrasonores à l'intérieur dudit premier conduit de transport pneumatique et/ou jusqu'au conduit de gaz de combustion, ledit dispositif à infrasons étant en outre destiné à s'opposer à une étape de fluctuation de la chute de pression dans le premier conduit de transport pneumatique et/ou jusqu'audit conduit de gaz de combustion, dans lequel ledit dispositif à infrasons comprend une première chambre et une deuxième chambre reliées l'une à l'autre par un tube,

caractérisé en ce que

ledit premier conduit de transport pneumatique est en outre relié à une soufflerie destinée à transporter pneumatiquement ledit sorbant pulvérulent depuis ledit réservoir de stockage de sorbant pulvérulent dans ledit premier conduit de transport pneumatique vers ledit conduit de gaz de combustion, ledit premier conduit de transport pneumatique comprenant une paroi de conduit et étant relié audit conduit de gaz de combustion, ladite soufflerie étant destinée à générer un écoulement de fluide de transport à l'intérieur dudit premier conduit de transport pneumatique dans lequel les particules dudit sorbant pulvérulent sont transportées,
dans lequel ladite première chambre comprend un excitateur situé à l'intérieur de ladite première chambre, prévu pour générer lesdites ondes infrasonores en fournissant des impulsions infrasonores au fluide de transport soufflé au moins partiellement à l'intérieur de ladite première chambre, lesdites ondes infrasonores générées étant transportées à travers le tube agissant comme un conduit de résonance pour atteindre la deuxième chambre,
dans lequel le dispositif comprend en outre un tuyau distributeur à débit réglable connecté à une première extrémité soit à la soufflerie, entre la soufflerie et la première chambre ou à la première chambre, et à une deuxième extrémité à la deuxième chambre, ledit tuyau distributeur à débit réglable étant prévu pour prélever une partie dudit fluide de transport soufflé par la soufflerie et l'introduire à l'intérieur de la deuxième chambre.

12. Dispositif pour améliorer la capture des composés polluants des gaz de combustion selon la revendication 11, comprenant en outre un dispositif de mélange ou de connexion situé entre ledit moyen de dosage et ledit premier conduit de transport pneumatique, prévu pour mélanger ledit sorbant pulvérulent dans ledit fluide de transport.

13. Dispositif pour améliorer la capture des composés polluants des gaz de combustion selon la revendication 11 ou la revendication 12, dans lequel le dispositif à infrasons est relié à la soufflerie et audit premier conduit de transport pneumatique.

14. Dispositif pour améliorer la capture des composés polluants des gaz de combustion selon l'une quelconque des revendications 11 à 13, dans lequel le réservoir de stockage de sorbant pulvérulent est un réservoir de stockage de sorbant pulvérulent dont le sorbant pulvérulent est choisi dans le groupe constitué de la chaux hydratée, la dolomie hydratée ou semi-hydratée, le calcaire, la dolomie, la chaux vive, dolomie vive, le carbonate ou bicarbonate de sodium, le sesquicarbonate de sodium dihydraté, la halloysite, la sépiolite, un composé organique carboné choisi parmi le charbon actif et le coke de lignite, les cendres volantes ou un mélange de ceux-ci.

15. Dispositif pour améliorer la capture des composés polluants des gaz de combustion selon la revendication 13 ou la revendication 14, comprenant en outre un absorbeur de basses (bass trap) Helmholtz relié à ladite première chambre ou de préférence sur le conduit entre la soufflerie et la première chambre, prévu pour empêcher les ondes infrasonores transportées à l'intérieur dudit premier conduit de transport pneumatique pendant ledit transport du sorbant pulvérulent d'atteindre la soufflerie.

16. Dispositif pour améliorer la capture des composés polluants des gaz de combustion selon l'une quelconque des revendications 13 à 15, comprenant un dispositif d'urgence ayant une première position étant une position d'urgence et une deuxième position étant une position de fonctionnement, ledit dispositif d'urgence comprenant un interrupteur connecté à un tuyau d'urgence reliant directement la soufflerie au premier conduit de transport pneumatique, en aval du dispositif à infrasons, ladite position d'urgence étant une position dans lequel l'interrupteur empêche le fluide de transport soufflé de pénétrer dans ladite première chambre et le détourne directement vers ledit premier conduit de transport pneumatique, en aval du dispositif à infrasons, et dans lequel la position de fonctionnement est une position dans lequel le fluide de transport soufflé est acheminé au moins partiellement vers ladite première chambre.

17. Dispositif pour améliorer la capture des composés polluants des gaz de combustion selon l'une quelconque des revendications 11 à 16, dans lequel ledit moyen de dosage est choisi parmi une vis de dosage, une vanne rotative à arbre vertical ou à arbre horizontal, une glissière d'air, un alimentateur à jet, un alimentateur à vis, un alimentateur à sas, une pompe à vis, un réservoir sous pression, un élévateur à air, ledit moyen de dosage étant situé entre ledit réservoir de stockage de sorbant pulvérulent et ledit premier conduit de transport pneumatique et étant prévu pour être contacté par les ondes soniques transportées à l'intérieur dudit premier conduit de transport pneumatique pendant ledit transport de sorbant pulvérulent.

EP 3 544 722 B1

**Fig. 1A**

*Fig. 1B*

10

11

9

13

C

31

B 13

15

A 13

2

3

5

13

12

13

4

13

1

14

*Fig. 1C*

*Fig. 1D*

**Fig. 2**

**Fig. 3**

Fig. 4

Fig. 4A

Fig. 5

EP 3 544 722 B1

*Fig. 6*

Fig. 6A

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 205346331 U
- FR 2941388 A1
- US 5860187 A

- WO 2014206880 A
- JP S61259747 B
- WO 9714650 A

**Non-patent literature cited in the description**

- **COCCO, R.** ; **REDDY-KARRI, S. B.** ; **KNOWLTON, T.** Introduction to Fluidization. *AICHE CEP*, 21 November 2014
- **GELDART, D.** Types of Gas Fluidization. *Powder Technol.*, 1973, vol. 7 (5), 285-292
- **CAGLI, A. S.** ; **DEVECI, B. N.** ; **OKUTAN, C. H.** ; **SIRKECI, D. A. A.** ; **TEOMAN, E. Y.** Flow Property Measurement Using the Jenike Shear Cell for 7 Different Bulk Solids. *Proc. Eur. Congr. Chem. Eng.*, 16 September 2007

- **JENICKE, A. W.** Gravity Flow of Bulk Solids. *Bull. Univ.*, 1961, vol. 52 (29), 1-309
- **JENICKE, A. W.** Storage and Flow of Solids. *Bull. Univ. Utah*, 1964, vol. 53 (26), 1-198
- **PENDYALA, R.** ; **JAYANTI, S.** ; **BALAKRISHNAN, A. R.** Flow and Pressure Drop Fluctuations in a Vertical Tube Subject to Low Frequency Oscillations. *Nucl. Eng. Des.*, 2008, vol. 238 (1), 178-187